# FASCICULE DE BREVET EUROPEEN

(11) **EP 2 879 346 B1**
(45) Date de publication et mention de la délivrance du brevet: **16.05.2018**
(21) Numéro de dépôt: 14193701.1
(22) Date de dépôt: 18.11.2014
(51) Int. Cl.: H04L 29/06, G06F 21/35, G06F 21/62, G06F 21/53, G09C 5/00

(54) **Procédé de traitement pour sécuriser des documents électroniques**
Verarbeitungsverfahren zum Sichern von elektronischen Dokumenten
Processing method for securing electronic documents

(30) Priorité: 02.12.2013 FR 1361958
(43) Date de publication de la demande: 03.06.2015
(73) Titulaire: IDEMIA France, 92700 Colombes (FR)
(72) Inventeur: Depinay, Jean-Loup, 92700 Colombes (FR)
(74) Mandataire: Cougard, Jean-Marie

(56) Documents cités:
- US-A1- 2006 005 017
- US-A1- 2011 270 751
- US-A1- 2013 179 985
- US-A1- 2013 266 141
- "The Trusted Execution Environment, White Paper", INTERNET CITATION, 28 février 2011 (2011-02-28), pages 1-26, XP002716538, Extrait de l'Internet: URL:http://www.globalplatform.org/document s/GlobalPlatform_TEE_White_Paper_Feb2011.p df [extrait le 2013-11-11]

## Description

### Arrière-plan de l'invention

La présente invention concerne la sécurisation de documents électroniques et porte plus particulièrement sur l'accès sécurisé à des données de texte sensibles au moyen d'une unité de traitement de confiance.

Il arrive fréquemment dans la vie courante ou dans un contexte professionnel par exemple d'être confronté à des documents dont le contenu est sensible et requiert donc un certain niveau de sécurisation. Cela peut être le cas par exemple pour un document confidentiel tel qu'un contrat contenant des informations sensibles (noms des parties, montant du contrat, clauses particulières...) dont les parties concernées souhaitent protéger l'accès.

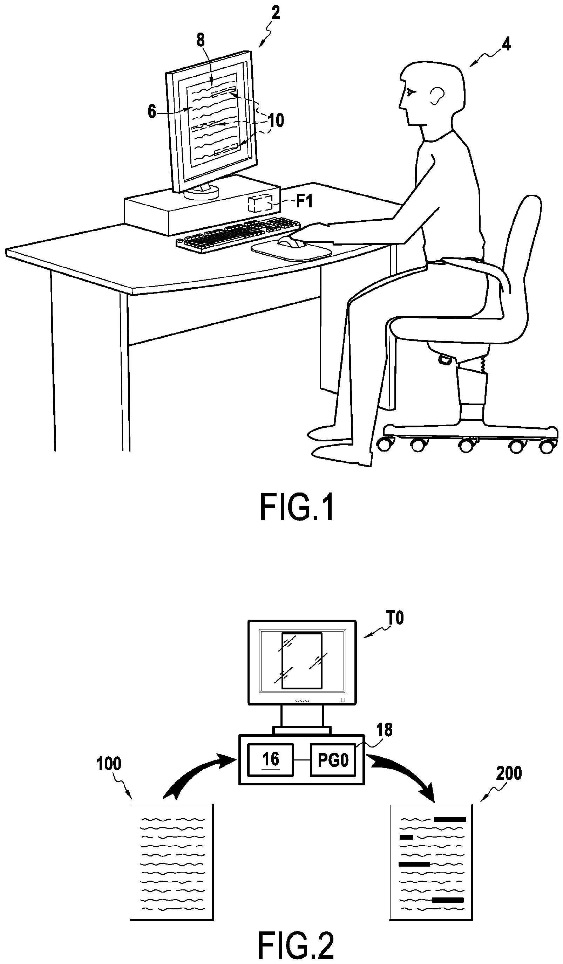

La **figure 1** représente l'exemple d'un utilisateur 4 accédant à l'aide d'un terminal 2 à un document électronique 6 (de type Word™ ou PDF™ par exemple) compris dans un fichier F1. On considère ici le cas où ce document 6 contient des données de texte classiques 8 ne nécessitant pas de protection particulière et des données de texte 10 dites sensibles que le créateur du document considère comme étant sensibles.

De façon connue, le niveau de sécurité dont bénéficie le document 6 lors de sa visualisation par l'utilisateur 4 dépend notamment du degré de confiance que l'on peut accorder au terminal 2 utilisé. Bien souvent, les terminaux (ordinateurs, tablettes etc.) sont exposés à des risques de sécurité, notamment des risques d'intrusions ou d'infections par des entités malveillantes (virus, dispositifs de surveillance...), qui sont difficiles à maîtriser. Si le terminal 2 n'est pas de confiance, l'accès au document 6 et tout particulièrement aux données sensibles 10 sur le terminal 2 présente donc des risques en termes de sécurité.

Il n'est pas toujours possible pour l'utilisateur 4 de savoir quel est le niveau de confiance que l'on peut accorder au terminal 2 utilisé, ni le niveau de confiance requis pour pouvoir accéder aux données de texte 8 en toute sécurité. Il n'est par ailleurs pas toujours possible pour l'utilisateur 4 de savoir si le document 6 auquel il souhaite accéder contient des informations sensibles et, dans l'affirmative, où ces informations figurent dans le document 6 en question.

Aucune solution ne permet aujourd'hui de répondre efficacement à ces problèmes. Il existe aujourd'hui un certain nombre de solutions d'encryptage permettant la protection par cryptage de documents électroniques sensibles. Ces solutions sont toutefois souvent peu ergonomiques pour l'utilisateur et n'offrent pas toujours un niveau de sécurité satisfaisant.

Il existe donc un besoin pour une solution permettant de sécuriser l'accès à des données sensibles de texte afin notamment de réduire les risques d'accès non autorisés aux données sensibles en question. Il est, en particulier, nécessaire de protéger plus efficacement l'accès à des données de texte sensibles (comprises par exemple dans un document électronique) sur un terminal bénéficiant d'un niveau de confiance ou de sécurité réduit.

Le document US 2013/179985 A1 datant du 11 juillet 2013 décrit un système pour obscurcir des données dans une application web distante. Selon ce document, un utilisateur est capable d'interagir avec une page web affichée sur un navigateur virtuel afin d'obscurcir des données. La page web comprenant les données obscurcies est transmise au navigateur public. Le firewall peut ensuite convertir des données obscurcies dans leur forme initiale par déchiffrage.

Le document US 2006/005017 A1 datant du 5 janvier 2006 décrit un procédé de reconnaissance et de chiffrage en temps réelle de données sensibles dans des documents. Le document US 2013/266141 A1 datant du 10 octobre 2013 décrit un procédé de traitement de données dans un dispositif portable et un procédé de paiement électronique utilisant un tel dispositif portable.

### Objet et résumé de l'invention

La présente invention est définie dans les revendications énoncées ci-après.

A cet effet, la présente invention propose un procédé de traitement mis en oeuvre par un système comprenant une première unité de traitement comprise dans un premier terminal, une deuxième unité de traitement et une troisième unité de traitement, pour permettre à un utilisateur d'accéder à une donnée sécurisée à partir d'un document électronique sécurisé, le procédé comprenant :
a) l'obtention par la première unité de traitement du document électronique sécurisé ;
b) le déclenchement par la première unité de traitement de l'affichage du document électronique sécurisé au niveau du premier terminal ;
c) la sélection par l'utilisateur d'au moins un marqueur contenu dans ledit document et visualisable par l'utilisateur lors de l'affichage ;
d) la détermination, à partir dudit marqueur sélectionné, d'une donnée sécurisée à partir de laquelle peut être retrouvée au moins une donnée de texte sensible ; et
e) l'obtention par la deuxième unité de traitement de ladite donnée sécurisée ;
f) la détermination par la deuxième unité de traitement, à partir de ladite donnée sécurisée, de ladite au moins une donnée de texte sensible à visualiser ;
g) l'obtention par la troisième unité de traitement de ladite au moins une donnée de texte sensible ; et
h) le déclenchement par ladite troisième unité de traitement de l'affichage de ladite au moins une donnée de texte sensible,
dans lequel lesdites deuxième et troisième unités de traitement sont distinctes de ladite première unité de traitement et exécutent chacune un système d'exploitation autonome vis-à-vis du système d'exploitation de la première unité de traitement.

L'invention trouve une application particulière lorsque la première unité de traitement présente des risques en termes de sécurité ou du moins n'offre pas un niveau de confiance satisfaisant pour permettre l'accès à des données de texte à caractère sensible. L'accès aux données sensibles au moyen d'une unité de traitement autonome et de confiance, à savoir la troisième unité dans l'invention, permet avantageusement de s'affranchir des risques éventuels de sécurité liés à la première unité de traitement.

Dans un mode de réalisation particulier, lors de l'étape a) d'obtention, la première unité de traitement reçoit le document électronique sécurisé depuis l'extérieur dudit premier terminal. Alternativement, le document sécurisé peut être récupéré depuis une mémoire du premier terminal.

Dans un mode de réalisation particulier, la donnée sécurisée est stockée dans le document sécurisé en association avec ledit marqueur, la détermination d) comprenant la récupération de la donnée sécurisée dans le document électronique sécurisé à partir dudit marqueur.

Dans un mode de réalisation particulier, la donnée sécurisée est le marqueur. Dans ce cas, le marqueur est par exemple un code ou identifiant.

Dans un mode de réalisation particulier, la donnée sécurisée est un identifiant, la donnée de texte sensible étant déterminée à l'étape de détermination f) à partir d'un fichier accessible par la deuxième unité de traitement, le fichier comprenant au moins ledit identifiant en association avec la donnée de texte sensible.

Dans un mode de réalisation particulier, la donnée sécurisée comprend la donnée de texte sensible sous forme cryptée, la détermination à l'étape f) comprenant le décryptage de ladite donnée sécurisée afin d'en déduire la donnée de texte sensible.

Dans un mode de réalisation particulier, le document sécurisé comprend une pluralité de marqueurs, la sélection par l'utilisateur d'un marqueur à l'étape c) entraînant la sélection automatique de la totalité des marqueurs compris dans le document sécurisé de sorte que la troisième unité de traitement déclenche à l'étape h) l'affichage de chaque donnée de texte sensible obtenue à partir desdits marqueurs.

De cette façon, à l'étape d) de détermination, la ou des données sécurisées associées à tous les marqueurs MQ présents dans le document sécurisé sont déterminées ce qui permet ultérieurement à l'utilisateur de visualiser, à partir de la sélection d'un seul marqueur, toutes les données de texte sensibles présentes dans le document électronique d'origine. L'accès à la pluralité de données de texte sensible est ainsi facilité.

Dans une première mise en oeuvre particulière, les deuxième et troisième unités de traitement forment une seule et même unité de traitement située dans le premier terminal, la deuxième unité de traitement étant comprise dans le premier terminal. La première et la deuxième unité de traitement sont respectivement un premier et un deuxième système d'exploitation qui s'exécutent exclusivement l'un de l'autre.

Dans un mode de réalisation, ces systèmes d'exploitation peuvent fonctionner en même temps.

Dans un mode de réalisation particulier, lorsque l'un des systèmes d'exploitation est en mode actif, l'autre est en mode inactif. Un mécanisme de bascule peut être prévu pour permettre le basculement d'un système d'exploitation vers l'autre.

Dans un cas particulier, le deuxième système d'exploitation répond à la norme « *TEE Protection Profile version 1.0* » définie par l'organisation *GlobalPlatform.*

Par exemple, la deuxième unité de traitement fonctionne en tant qu'« OS sécurisé ou « TEE OS » et la première unité de traitement fonctionne en tant que « Rich OS ».

Alternativement, les deuxième et troisième unités de traitement peuvent être situées hors du premier terminal.

Dans un mode de réalisation particulier, la troisième unité de traitement est apte à contrôler un dispositif de prise d'images, le marqueur étant un code lisible par machine, dans laquelle la sélection du marqueur à l'étape c) est réalisée par la troisième unité de traitement sur commande de l'utilisateur lorsque le marqueur affiché au niveau du premier terminal est visualisé au moyen dudit dispositif de prise d'images.

Ce mode de réalisation est avantageux en ce qu'il permet à l'utilisateur de sélectionner de façon simple et ergonomique un ou plusieurs marqueurs présents dans le document sécurisé. L'utilisateur peut par exemple utiliser le deuxième terminal à la manière d'une loupe devant l'écran du premier terminal afin de sélectionner les marqueurs de son choix.

La troisième unité de traitement peut par exemple sélectionner en continu chaque marqueur visualisé au moyen dudit dispositif de prise d'images pendant une durée déterminée. La sélection d'une pluralité de marqueurs est ainsi grandement facilitée.

Dans une deuxième mise en oeuvre particulière, les deuxième et troisième unités de traitement forment une seule et même unité de traitement située dans un second terminal distant dudit premier terminal.

Cette deuxième mise en oeuvre permet au deuxième terminal d'obtenir la donnée sécurisée directement du premier terminal sans avoir à faire intervenir un éventuel serveur distant.

Dans une variante de cette deuxième mise en oeuvre, la donnée sécurisée est reçue, lors de l'étape e) d'obtention, par la troisième unité de traitement en provenance du premier terminal via une liaison de communication courte ou moyenne portée établie entre les premier et deuxième terminaux.

Dans une variante de cette deuxième mise en oeuvre, le procédé comprend la réception par la troisième unité de traitement de moyens de traitement (par exemple un programme, une clé cryptographique ou encore une table de correspondance), la détermination f) étant réalisée par la troisième unité de traitement à partir des moyens de traitement en combinaison avec ladite donnée sécurisée.

Dans une troisième mise en oeuvre particulière, la deuxième unité de traitement est distincte de la troisième unité de traitement, la troisième unité de traitement étant comprise dans un deuxième terminal distinct dudit premier terminal et la deuxième unité de traitement étant comprise dans un serveur distant desdits premier et deuxième terminaux, le procédé comprenant
la transmission par la deuxième unité de traitement à la troisième unité de traitement d'une donnée déterminée permettant à la troisième unité de traitement d'obtenir la donnée de texte sensible à l'étape g).

De façon préférée, la liaison de communication utilisée dans cette troisième mise en oeuvre particulière entre la deuxième et la troisième unité de traitement ne passe pas par la première unité de traitement. L'indépendance entre cette liaison et la première unité de traitement permet de sécuriser l'envoi de toutes données (tel que l'envoi d'une donnée de texte sensible) depuis le serveur vers le deuxième terminal.

Dans une variante de cette troisième mise en oeuvre, la donnée déterminée est transmise par la deuxième unité de traitement à la troisième unité de traitement sous forme cryptée au moyen d'une première clé cryptographique,
la donnée de texte sensible étant obtenue par la troisième unité de traitement à l'étape g) en décryptant la donnée déterminée cryptée à partir d'une seconde clé cryptographique concordant avec la première clé cryptographique. Cette variante permet d'obtenir un niveau de sécurité optimal.

Dans une variante de cette troisième mise en oeuvre, le procédé comprend une authentification de l'utilisateur réalisée par la première unité de traitement auprès du serveur distant, l'authentification comprenant l'envoi à la deuxième unité de traitement d'une donnée d'authentification dudit utilisateur,
la première clé cryptographique étant déterminée par la deuxième unité de traitement à partir de ladite donnée d'authentification.

Dans une variante de cette troisième mise en oeuvre, le procédé comprend :
- la recherche par la première unité de traitement du deuxième terminal dans un voisinage proche du premier terminal à l'aide de moyens de communication sans fil ;
- la réception par la première unité de traitement d'un identifiant du deuxième terminal lorsque ce dernier est dans le champ de détection des moyens de communication sans fil ; et
- la transmission par la première unité de traitement dudit identifiant au serveur distant,
- dans lequel la deuxième unité de traitement identifie, à partir dudit identifiant, le deuxième terminal vers qui transmettre la donnée déterminée.

Cette variante permet de s'assurer que la donnée déterminée est bien envoyée vers la troisième unité de traitement appropriée. L'utilisateur peut ainsi visualiser les données de texte sensibles sur le deuxième terminal de son choix. L'utilisateur peut en particulier choisir parmi plusieurs terminaux celui présentant un niveau de confiance suffisant pour réaliser le procédé de traitement du point de vue de la troisième unité de traitement.

Dans une variante de cette troisième mise en oeuvre, la troisième unité de traitement est apte à contrôler un dispositif de prise d'images, le marqueur étant un code lisible par machine, dans lequel :
- la sélection du marqueur à l'étape c) est réalisée par ladite troisième unité de traitement sur commande de l'utilisateur lorsque le marqueur affiché au niveau du premier terminal est visualisé au moyen dudit dispositif de prises d'images,
- la détermination de ladite donnée sécurisée à l'étape d) est réalisée par la troisième unité de traitement, et
- la deuxième unité de traitement reçoit, à l'étape e), la donnée sécurisée depuis la troisième unité de traitement.

Dans une variante de cette troisième mise en oeuvre, la troisième unité de traitement sélectionne en continu chaque marqueur visualisé au moyen dudit dispositif de prise d'images pendant une durée déterminée.

Plus généralement, la troisième unité de traitement est comprise dans un téléphone mobile. En particulier, le premier et/ou le deuxième terminal peut le cas échéant être un téléphone mobile.

Dans un mode de réalisation particulier, la sélection c) est réalisée au moyen d'un pointeur qui est visualisable lors de l'affichage à l'étape b) au niveau du premier terminal et contrôlable par l'utilisateur au moyen d'une interface du premier terminal,
le pointeur étant configuré pour changer d'aspect visuel lors dudit affichage lorsqu'il entre dans une région du document électronique sécurisé correspondant audit marqueur. Il est ainsi plus facile pour l'utilisateur d'identifier les marqueurs dans le document sécurisé, en particulier lorsque ce dernier comporte un grand nombre de données de texte ou quand les marqueurs ne sont pas aisément visualisables par l'utilisateur.

Dans un mode de réalisation particulier, le procédé comprend la réception par la troisième unité de traitement du document électronique sécurisé et l'affichage à l'étape h) du document électronique sécurisé par la troisième unité de traitement en combinaison avec la donnée de texte sensible.

Dans un mode de réalisation particulier, le procédé comprend, avant l'étape a), les étapes suivantes mise en oeuvre par une quatrième unité de traitement :
i) l'obtention d'un document électronique initial ;
j) la détermination dans ledit document électronique initial de la donnée de texte sensible à sécuriser ;
k) la génération de la donnée sécurisée à partir de la donnée de texte sensible ; et
l) le traitement du document électronique initial afin d'obtenir le document électronique sécurisé, comprenant l'inclusion dans le document électronique initial du marqueur associé à la donnée sécurisée, ainsi que la suppression ou le masquage de la donnée de texte sensible.

Comme déjà indiqué, la création du document électronique sécurisé permet avantageusement de limiter l'accès à des données de texte sensible afin de pallier à certains risques de sécurité liés notamment au premier terminal mentionné ci-avant.

Dans un mode de réalisation particulier, le traitement l) comprend en outre l'inclusion dans le document électronique initial de la donnée sécurisée.

Dans un mode de réalisation particulier, l'étape d'obtention i) comprend la réception du document électronique depuis un serveur distant.

Dans un mode de réalisation particulier, la détermination j) comprend l'affichage dudit document électronique initial et la sélection par la quatrième unité de traitement, sur commande d'un utilisateur, de la donnée de texte sensible à sécuriser.

Dans un mode de réalisation particulier, le document électronique initial comprend une chaîne de données de texte successives dans un ordre déterminé, le marqueur étant inséré par la quatrième unité de traitement dans le document initial lors dudit traitement l) de sorte que, à l'affichage à l'étape b) du document électronique sécurisé, le marqueur remplace ladite donnée de texte sensible dans ladite chaîne de données de texte.

Ainsi, le marqueur inséré par la quatrième unité de traitement se trouve a la même position dans la chaîne de données de texte que la donnée sensible correspondante avant sa suppression ou son masquage.

Dans un mode de réalisation particulier, lors du traitement à l'étape l), au moins 70% des données de texte initialement comprises dans le document électronique initial sont supprimés ou masqués dans le document électronique sécurisé.

De cette manière, bien que les informations sensibles ne soient plus directement accessibles par l'utilisateur lors de l'affichage du document sécurisé, l'utilisateur est malgré tout en mesure de prendre connaissance de la teneur générale du document. L'utilisateur peut notamment apprécier l'intérêt du contenu et déterminer s'il est nécessaire d'accéder aux données de texte protégées.

Dans un mode particulier de réalisation, les différentes étapes du procédé de traitement sont déterminées par des instructions de programmes d'ordinateurs.

En conséquence, l'invention vise aussi un programme d'ordinateur sur un support d'informations, ce programme étant susceptible d'être mis en oeuvre dans un terminal ou un ordinateur, ce programme comportant des instructions adaptées à la mise en oeuvre d'au moins une partie des étapes du procédé de traitement tel que défini ci-dessus.

L'invention vise aussi un ou plusieurs supports d'enregistrement (ou support d'informations) lisibles par un ordinateur, et comportant au moins une partie des instructions d'un programme d'ordinateur tel que mentionné ci-dessus.

Les programmes mentionnés ci-avant peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

La présente invention concerne également un système tel que défini ci-avant pour mettre en oeuvre le procédé de traitement de l'invention, ce système comprenant la première unité de traitement comprise dans le premier terminal, la deuxième unité de traitement et la troisième unité de traitement, pour permettre à un utilisateur d'accéder à une donnée sécurisée à partir d'un document électronique sécurisé.

En particulier, le système peut comprendre :
a) des moyens d'obtention par la première unité de traitement du document électronique sécurisé ;
b) des moyens de déclenchement par la première unité de traitement de l'affichage du document électronique sécurisé au niveau du premier terminal ;
c) des moyens de sélection par l'utilisateur d'au moins un marqueur contenu dans le document sécurisé et visualisable par l'utilisateur lors de l'affichage ;
d) des moyens de détermination, à partir du marqueur sélectionné, d'une donnée sécurisée à partir de laquelle peut être retrouvée au moins une donnée de texte sensible ; et
e) des moyens d'obtention par la deuxième unité de traitement de la donnée sécurisée ;
f) des moyens de détermination par la deuxième unité de traitement, à partir de la donnée sécurisée, de ladite au moins une donnée de texte sensible à visualiser ;
g) des moyens d'obtention par la troisième unité de traitement de ladite au moins une donnée de texte sensible ; et
h) des moyens de déclenchement par ladite troisième unité de traitement de l'affichage de ladite au moins une donnée de texte sensible,
dans lequel lesdites deuxième et troisième unités de traitement (60 ; 40) sont distinctes de ladite première unité de traitement et exécutent chacune un système d'exploitation autonome vis-à-vis du système d'exploitation de la première unité de traitement.

Les différents modes de réalisation et variantes définis ci-avant en relation avec le procédé de traitement l'invention s'appliquent également au système de l'invention. En outre, les mêmes avantages que ceux indiqués ci-avant résultent du système de l'invention et de ses variantes.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 déjà décrite représente une situation proposée à titre d'exemple, dans laquelle un utilisateur visualise sur l'écran d'un terminal un document contenant des données de texte sensibles ;
- la figure 2 représente schématiquement la création d'un document sécurisé conformément à un mode de réalisation particulier de l'invention ;
- la figure 3A représente plus précisément la structure d'un document électronique initial et d'un document sécurisé obtenu à partir du document électronique initial, conformément à un mode de réalisation particulier de l'invention ;

- la figure 3B représente schématiquement des exemples de mise en oeuvre d'un marqueur au sens de l'invention ;
- la figure 4, sous forme d'un organigramme, les principales étapes de la création d'un document sécurisé selon un mode de réalisation particulier de l'invention ;
- la figure 5 représente schématiquement un système comprenant un premier terminal, un serveur distant et un deuxième terminal pour mettre en oeuvre un procédé de traitement selon un premier mode de réalisation de l'invention ;
- les figures 6, 7 et 8 représentent respectivement l'architecture matérielle du premier terminal, du serveur distant et du deuxième terminal de la figure 5, conformément au premier mode de réalisation de l'invention ;
- la figure 9 représente, sous forme d'un organigramme, les principales étapes d'un procédé de traitement selon le premier mode de réalisation de l'invention ;
- la figure 10 représente, sous la forme d'un organigramme, une variante de réalisation du procédé de la figure 9 ;
- la figure 11 représente un exemple de capture de marqueurs affichés à l'écran d'un premier terminal conformément à la variante de la figure 10 ;
- la figure 12 représente, sous forme d'un organigramme, les principales étapes d'un procédé de traitement selon un deuxième mode de réalisation de l'invention ;
- la figure 13 représente, sous la forme d'un organigramme, une variante de réalisation du procédé de la figure 12 ;
- la figure 14 représente l'architecture matérielle d'un terminal conforme à un troisième mode de réalisation de l'invention ;
- la figure 15 représente, sous forme d'un organigramme, les principales étapes d'un procédé de traitement selon le troisième mode de réalisation de l'invention ; et
- la figure 16 représente une mise oeuvre particulière d'un pointeur pouvant être utilisé pour réaliser l'étape de sélection du marqueur selon l'invention.

### Description détaillée de plusieurs modes de réalisation

La présente invention concerne la sécurisation de documents électroniques et porte plus particulièrement sur l'accès sécurisé à des données de texte sensibles au moyen d'une unité de traitement de confiance.

L'invention s'applique tout particulièrement à la sécurisation de l'accès à des données de texte sensibles contenues dans un document électronique, ce dernier étant reçu par un terminal dont le niveau de confiance est insuffisant pour permettre un accès sûr aux dites données sensibles.

On entend dans ce document par « données de texte », toutes données en format électronique (format Word, PDF etc.) se rapportant à du texte, des chiffres et plus généralement à des caractères ou symboles dans un langage quelconque compréhensibles par l'homme ou par une machine. Il peut s'agir de données de type Unicode par exemple. Outre les données de textes, la présente invention peut s'appliquer plus généralement à des données graphiques contenues dans un document électronique. Une donnée graphique au sens de l'invention peut être une donnée de texte, une illustration vectorielle (un graphique par exemple) et/ou une image.

Afin notamment de répondre aux besoins identifiés précédemment, la déposante a mis au point une solution permettant la sécurisation d'un document électronique contenant au moins une donnée de texte sensible à protéger, ainsi que l'accès sécurisé à un tel document afin de ne pas compromettre la confidentialité ou la sécurité de ces données sensibles lorsqu'un utilisateur accède audit document. L'invention vise donc en particulier la création d'un document sécurisé et la visualisation ultérieure de ce document de manière sécurisée.

Plus précisément, l'invention vise un procédé de traitement mis en oeuvre par un système comprenant au moins deux unité de traitement distinctes, ces deux unités de traitement exécutant chacune un système d'exploitation autonome l'un de l'autre. Comme expliqué plus en détail par la suite, la première unité de traitement est notamment destinée à réaliser l'affichage d'un document sécurisé ayant subi un traitement de sécurisation d'au moins une donnée de texte sensible. La deuxième unité de traitement vise à offrir à l'utilisateur un accès sécurisé aux données sensibles en question. L'accès aux données sensibles au moyen de la deuxième unité de traitement autonome permet de s'affranchir des risques éventuels de sécurité liés à la première unité de traitement.

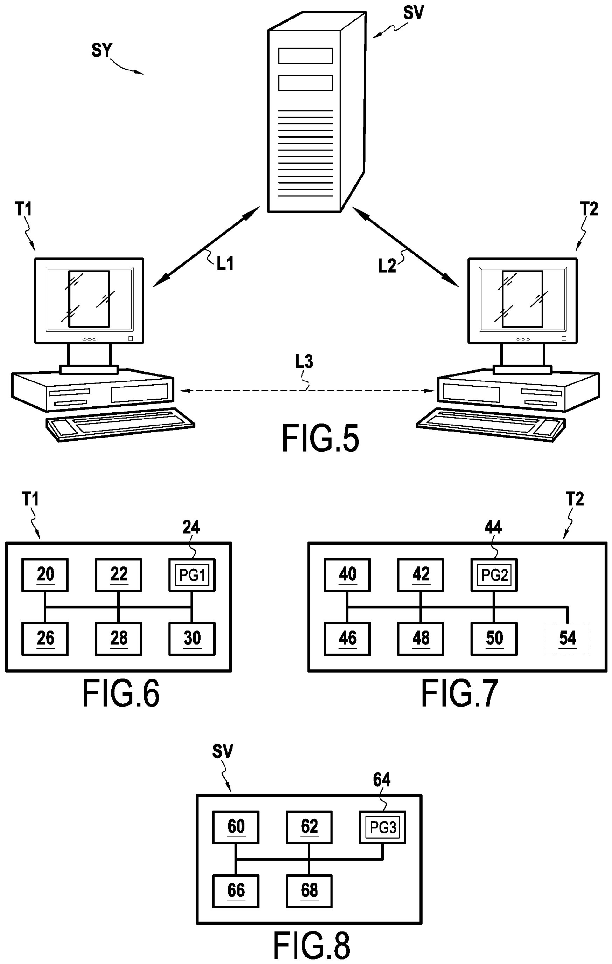

Un exemple de création, selon un mode de réalisation particulier de l'invention, d'un document électronique sécurisé 200 à partir d'un document électronique initial 100 contenant au moins une donnée de texte sensible est à présent décrit en référence aux **figures 2 à 4****.** Différents modes de réalisation de l'accès sécurisé à de telles données de texte sensibles seront ensuite décrits en référence aux **figures 5 à 16****.**

La **figure 2** représente schématiquement un terminal T0 utilisé dans un mode de réalisation particulier pour créer un document électronique sécurisé 200 à partir d'un document électronique initial 100, ce dernier comprenant au moins une donnée de texte sensible dont il est nécessaire de protéger l'accès.

Le terminal T0 présente ici l'architecture matérielle classique d'un ordinateur ou équivalent et comprend notamment une unité de traitement 16 (un processeur par exemple) capable d'exécuter un programme d'ordinateur PG0 contenu dans une mémoire 18 de T0. L'exécution du programme PG0 permet d'appliquer un traitement de sécurisation TF1 au document d'origine 100 afin d'obtenir le document sécurisé 200. Le document 100 comprend dans cet exemple une pluralité de données de texte dont certaines présentent un caractère sensible au sens de l'invention.

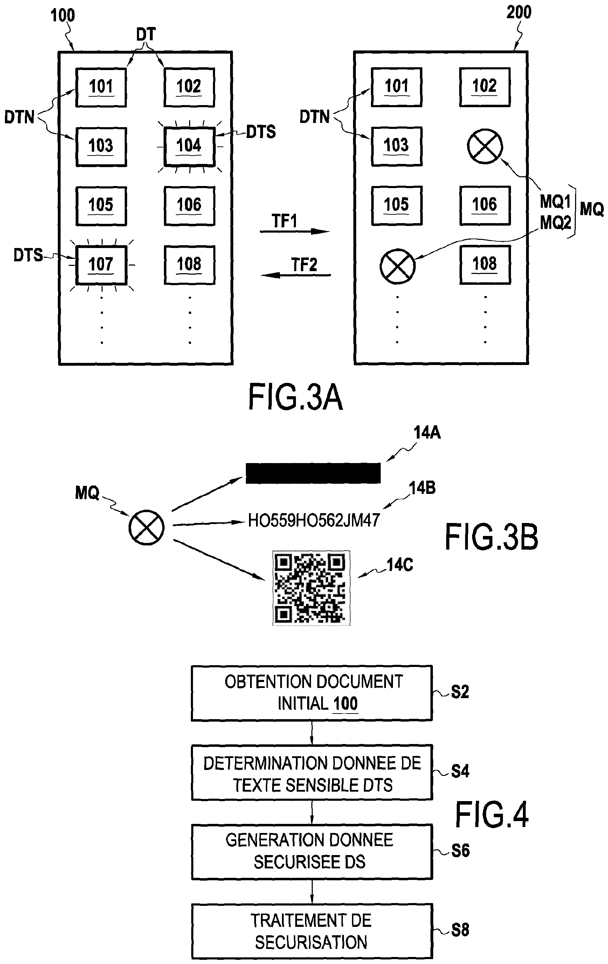

La **figure 3A** représente plus précisément la structure du document électronique d'origine 100, ainsi que celle du document électronique sécurisé 200 une fois le traitement de sécurisation TF1 réalisé. Dans l'exemple considéré ici, le document électronique 100 comprend une pluralité de données (ou blocs) de texte DT, ces données contenant :
- des données de textes DTN dites normales (référencées ici 101 à 103 et 105 à 108) dans le sens où elles ne sont pas considérées comme étant sensibles et ne requièrent donc pas de traitement particulier en termes de sécurité ; et
- des données de texte DTS dites sensibles (référencées ici 104 et 107) qui requièrent donc une sécurisation conformément au procédé de l'invention.

La transformation TF1 permet d'obtenir à partir du document électronique 100 le document sécurisé 200, ce dernier comprenant :
- les données de texte DTN normales (101 à 103 et 105 à 108) identiques à celles présentes dans le document d'origine 100 ; et
- des marqueurs MQ1 et MQ2 (notés collectivement MQ) associés respectivement aux données de texte sensibles 104 et 107.

Les marqueurs MQ1 et MQ2 constituent respectivement des marqueurs des données de texte sensibles 104 et 107 qui ont été masquées ou supprimées dans le document sécurisé 200. Dans cet exemple, les marqueurs remplacent respectivement les données de texte sensibles 104 et 107, respectivement.

Comme expliqué en détail ultérieurement, les marqueurs MQ sont visualisables par l'utilisateur lorsque le document sécurisé 200 est en cours d'affichage (au niveau de T1 dans cet exemple). Chaque marqueur est associé à au moins une donnée de texte sensible DTS correspondante dans le document d'origine 100.

Lorsque le document 200 est affiché à l'écran, l'utilisateur ne peut voir ou accéder directement aux données sensibles DTS. Il peut en revanche sélectionner au moyen d'une interface homme/machine appropriée l'un ou plusieurs des marqueurs MQ présents dans le document sécurisé 200. Comme expliqué ci-après, la sélection d'un marqueur MQ par l'utilisateur cause l'initiation d'un traitement visant à permettre l'accès de la (ou des) donnée de texte sensible associée à chaque marqueur sélectionné.

Le procédé de traitement selon ce mode particulier de réalisation permet de réaliser la conversion inverse TF2 afin d'obtenir le document électronique 100 à partir du document sécurisé 200 ou, tout du moins, ce procédé permet l'accès aux données sensibles DTS à partir du document sécurisé 200.

Chaque marqueur MQ peut présenter une forme quelconque dans la mesure où il est :
- visualisable par l'utilisateur dans le document sécurisé 200 lors de l'affichage de ce dernier ; et
- sélectionnable afin d'obtenir selon le procédé de l'invention la ou les données de texte sensibles associées.

Comme expliqué plus en détail ci-après, chaque marqueur MQ est associé à au moins une donnée sécurisée DS qui, conformément au procédé de l'invention, permettra par la suite à l'utilisateur d'accéder à une ou plusieurs données de texte sensibles correspondantes. Un marqueur peut être associé de manière exclusive à une donnée sécurisée DS. Par ailleurs, plusieurs marqueurs MQ peuvent être associés à une même donnée sécurisée DS.

Dans la suite de ce document, on comprendra qu'une donnée de texte sensible peut correspondre à une ou une pluralité de données de texte sensibles selon le cas.

La **figure 3B** représente quelques exemples de marqueurs MQ selon la présente invention. Le marqueur MQ peut être représenté par un objet graphique quelconque tel qu'une simple marque noire (ou un blanc) apparaissant dans le document sécurisée 200, préférentiellement à l'endroit où aurait dû apparaître la donnée de texte sensible DTS correspondante.

Chaque marqueur MQ comprend par exemple un lien pointant vers la donnée sécurisée DS correspondante de sorte que la sélection du marqueur entraîne la détermination de cette donnée sécurisée DS.

Alternativement, le marqueur MQ peut se présenter sous la forme d'un code ou d'un identifiant, comme par exemple le code 14B représenté ici. Comme expliqué ci-après, ce code ou identifiant permet par la suite de récupérer la donnée de texte sensible correspondante.

Selon une autre variante, le marqueur MQ peut être formé par un code 14C d type 2D ou équivalent (code barre etc.). Au vu du présent document, l'homme du métier saura adapter la forme et les caractéristiques de chaque marqueur MQ aux besoins de la situation.

La **figure 4** est un organigramme représentant les principales étapes (S2 à S8) d'un procédé de création d'un document électronique sécurisé 200 selon un mode de réalisation particulier de l'invention. Plus précisément, l'unité de traitement 16 met en oeuvre le procédé de création de l'invention en exécutant le programme PG0.

Au cours d'une étape S2, l'unité de traitement 16 (ou plus généralement le terminal T0) obtient le document électronique initial 100, celui-ci pouvant par exemple être stocké à l'avance dans une mémoire du terminal T0 ou reçu par l'unité de traitement 16 depuis l'extérieur du terminal T0.

Dans un mode particulier, l'étape d'obtention S2 comprend la réception du document électronique 100 depuis un serveur distant (e.g. le serveur SV décrit ultérieurement en référence à la **figure 5**).

L'unité de traitement 16 détermine (S4) une ou plusieurs données de texte sensible DTS dans le document initial 100. Cette détermination peut être réalisée par diverses manières comme par exemple par sélection par l'utilisateur des données sensibles DTS concernées lors de l'affichage du document initial 100 à l'écran du terminal T0. Dans un mode particulier, l'étape S4 de détermination comprend ainsi l'affichage du document d'origine 100 et la sélection par un utilisateur de la donnée de texte sensible DTS à sécuriser

La donnée sensible DTS est typiquement choisie au vu de son caractère confidentiel ou particulièrement sensible en termes de sécurité. Cette sélection peut être réalisée manuellement par l'utilisateur ou automatiquement par l'unité de traitement 16 selon des critères prédéfinis.

Une fois la donnée de texte sensible DTS déterminée (S4), l'unité de traitement 16 génère (S6), à partir de la donnée sensible DTS déterminée à l'étape S4, une donnée sécurisée DS qui sera utilisée dans une étape S6 à suivre pour réaliser un traitement de sécurisation du document électronique 100. La donnée sécurisée DS peut présenter diverses formes comme expliqué ci-après.

Au cours de l'étape S8, l'unité de traitement 16 réalise (S8) un traitement de sécurisation (ou traitement éditorial) visant à sécuriser le document initial 100 afin d'obtenir le document sécurisé 200 (transformation TF1). Ce traitement comprend l'inclusion dans le document électronique initial 100 du ou des marqueurs MQ associés à la donnée sécurisée DS ainsi que la suppression ou le masquage de la donnée de texte sensible DTS correspondante. Dans un mode de réalisation particulier, le traitement de sécurisation S8 est un traitement éditorial.

On entend ici par masquage le fait qu'un utilisateur ne puisse plus visualiser la données de texte sensible à l'affichage du document sécurisé 200. Pour accéder à la donnée sensible DTS, il est nécessaire de réaliser le procédé de traitement de l'invention dont certains exemples de réalisation seront décrits ultérieurement.

Le marqueur MQ présente les caractéristiques décrites précédemment en référence aux **figures 3A et 3B****.** En particulier, le marqueur est :
- visualisable par l'utilisateur lorsque le document sécurisée 200 est en cours d'affichage ; et
- sélectionnable par l'utilisateur à l'aide de moyens de sélection appropriés afin de permettre la récupération par un traitement particulier TF2 de la donnée sensible DTS concernée.

Dans cet exemple, les marqueurs MQ1 et MQ2 sont chacun associé à une donnée sécurisée DS respective.

Comme indiqué précédemment, la donnée sécurisée DS peut présenter différentes formes. Dans une première variante, la donnée sécurisée DS est un code ou un identifiant permettant de retrouver ultérieurement la donnée de texte sensible DTS déterminée. Dans une deuxième variante, la donnée sécurisée DS comprend la donnée sensible DTS sous forme cryptée. Selon une troisième variante, la donnée sécurisée DS n'est autre que le marqueur MQ lui-même. Cela peut être le cas par exemple lorsque le marqueur MQ est un code ou identifiant. Dans cette troisième variante, l'étape S6 de génération de la donnée sécurisée DS abouti donc à la génération du marqueur MQ lui-même qui doit être insérer à l'étape S8.

Selon un mode particulier, le traitement de sécurisation S8 comprend en outre l'inclusion de la donnée sécurisée DS dans le document initial 100 (en passe de devenir le document sécurisé 200). Une fois incluse, la donnée sécurisée DS n'est pas nécessairement visualisable à l'affichage du document sécurisé 200. L'inclusion de la donnée DS dans le document initial n'est toutefois pas obligatoire contrairement au marqueur MQ qui doit être présent et visualisable dans le document sécurisé 200 afin de permettre sa sélection ultérieure par l'utilisateur.

Dans un mode particulier, le document électronique 100 comprend une chaîne de données de texte DT successives dans un ordre déterminé. Le marqueur MQ est inséré (S8) par l'unité de traitement 16 dans le document 100 de sorte que, lors d'un affichage ultérieur du document sécurisé 200, ce marqueur MQ remplace la donnée de texte sensible DTS dans la chaîne de données de texte. Ainsi, le marqueur MQ a la même position dans la chaîne de données de texte DT que la donnée sensible DTS correspondante avant sa suppression ou son masquage.

Dans un mode particulier, lors de l'étape de traitement de sécurisation S8, au moins 70% (voire 90% ou plus) des données de texte DT initialement comprises dans le document électronique d'origine 100 sont supprimés ou masqués. De cette manière, bien que les informations sensibles ne soient plus directement accessibles par l'utilisateur lors de l'affichage du document sécurisé 200, l'utilisateur est malgré tout en mesure de prendre connaissance de la teneur générale du document. L'utilisateur peut notamment apprécier l'intérêt du contenu et déterminer s'il est nécessaire d'accéder aux données DTS protégées.

Comme indiqué précédemment, la création du document électronique sécurisé 200 permet avantageusement de limiter l'accès à des données de texte sensibles afin de pallier à certains risques de sécurité liés notamment à un terminal donné. Une fois le document sécurisé 200 obtenu, il est donc nécessaire pour l'utilisateur de pouvoir initier un traitement visant à récupérer la ou les données sensibles initialement présente(s) dans le document électronique d'origine 100.

A cet effet, un procédé de traitement mis en oeuvre par un système SY conformément à un premier mode de réalisation est à présent décrit en référence aux **figures 5 à 9****.**

La **figure 5** représente un système SY comprenant une première unité de traitement 20 comprise dans un premier terminal T1, une deuxième unité de traitement 60 et une troisième unité de traitement 40.

Chacune des unités de traitement 20, 40 et 60 peut être tout ou partie d'un processeur, d'un contrôleur ou équivalent capable de mettre en oeuvre les étapes requises du procédé de traitement de l'invention.

Dans ce mode de réalisation, les unités de traitement 60 et 40 sont comprises respectivement dans un serveur SV et dans un deuxième terminal T2. D'autres configurations sont toutefois envisageables comme expliqué dans la suite de ce document.

Les unités de traitement 20, 40 et 60 sont donc distinctes et indépendantes les unes des autres. La troisième unité de traitement 40 est en particulier configurée pour exécuter un système d'exploitation autonome vis-à-vis du système d'exploitation exécuté par la première unité de traitement 20.

On considère ici l'hypothèse où la première unité de traitement 20 présente des risques en termes de sécurité ou du moins n'offre pas un niveau de confiance satisfaisant pour permettre l'accès à des données de texte à caractère sensible. On considère en revanche la troisième unité de traitement 40 comme étant une unité de traitement de confiance.

Le premier terminal T1 est ici capable de communiquer avec le serveur distant SV via une première liaison de communication L1. De même, le serveur SV est capable de communiquer avec le deuxième terminal T2 via une deuxième liaison de communication L2. La liaison de communication L2 est telle qu'elle ne passe pas par le premier terminal T1. Autrement dit, toutes données envoyées par le serveur SV au deuxième terminal T2 via la liaison L2 ne passent pas par le premier terminal T1. Comme cela apparaîtra dans la suite de cette description, l'indépendance entre la liaison L2 et le premier terminal T1 permet de sécuriser l'envoi de toutes données (comme celui de la données sensibles DTS par exemple) depuis le serveur SV vers le terminal T2.

De manière facultative, le premier terminal T1 et le deuxième terminal T2 sont le cas échéant capables de communiquer ensemble via une liaison de communication L3.

Le type des liaisons de communication L1, L2 et L3 peut être quelconque. Il peut s'agir en particulier de liaisons filaires ou sans fil. La liaison L3 est par exemple une liaison de communication sans fil courte ou moyenne portée (WiFi, bluetooth ou NFC par exemple).

Les **figures 6, 7 et 8** représentent schématiquement les architectures matérielles du premier terminal T1, du deuxième terminal T2 et du serveur SV. Dans cet exemple, chacune de ces trois entités présentent l'arrangement matériel d'un ordinateur classique ou équivalent.

Plus précisément, le terminal T1 comprend ici une première unité de traitement 20 (e.g. un processeur ou un contrôleur), une mémoire morte (de type ROM) 22, une mémoire non volatile réinscriptible 24 (de type EEPROM par exemple), une mémoire volatile réinscriptible (de type RAM) 26, une interface de communication 28 permettant à l'unité de traitement 20 de communiquer avec l'extérieur du terminal T1 et une interface homme/machine 30 permettant à un utilisateur d'interagir avec le terminal T1. Cette interface homme/machine 30 comprend notamment des moyens d'affichage tels qu'un écran par exemple.

La mémoire morte 24 constitue dans cet exemple un support d'enregistrement conforme à l'invention, lisible par l'unité de traitement 20, et sur lequel est enregistré un programme d'ordinateur PG1 conforme à l'invention, comportant des instructions pour l'exécution d'au moins une partie des étapes d'un procédé de traitement selon l'invention.

Le terminal T2 présente ici une structure matérielle analogue à celle du terminal T1 et comprend en particulier la troisième unité de traitement 40 (e.g. un processeur ou un contrôleur), une mémoire ROM 42, une mémoire non volatile réinscriptible 44 (e.g. EEPROM), une mémoire RAM 46, une interface de communication 48 permettant à l'unité de traitement 40 de communiquer avec l'extérieur du terminal T2 et une interface homme/machine 50 permettant à un utilisateur d'interagir avec le terminal T2. Cette interface homme/machine 50 comprend notamment des moyens d'affichage tels qu'un écran par exemple.

Le terminal T2 est par exemple un téléphone mobile, un ordinateur portable ou de bureau, une tablette ou équivalent.

Dans le cas du téléphone mobile, la troisième unité de traitement 40 est par exemple comprise dans une carte à puce conforme à la norme ISO 7816 ou dans une puce apte à être fixée au circuit imprimé du téléphone mobile. Le téléphone mobile comprend alors un autre processeur apte à contrôler les fonctions classiques du téléphone mobile (contrôle de l'affichage, de la communication avec un serveur distant, de la prise d'images etc.). Un système d'exploitation de confiance est alors exécuté sur cet autre processeur.

De façon facultative, le terminal T2 peut en outre comprendre un dispositif de prise de vue (ou de prise d'images) 54 apte à faire l'acquisition d'images ou de vidéos. Ce dispositif 54 comprend par exemple une caméra ou équivalent.

La mémoire non volatile réinscriptible 44 constitue ici un support d'enregistrement conforme à l'invention, lisible par l'unité de traitement 40, et sur lequel est enregistré un programme d'ordinateur PG2 conforme à l'invention, comportant des instructions pour l'exécution d'au moins une partie des étapes d'un procédé de traitement selon l'invention.

Le serveur SV présente également une structure matérielle analogue à celle d'un ordinateur et comprend en particulier dans cet exemple la deuxième unité de traitement 60 (e.g. un processeur ou un contrôleur), une mémoire ROM 62, une mémoire non volatile réinscriptible 64 (e.g. EEPROM), une mémoire RAM 66 et une interface de communication 68 permettant à l'unité de traitement 60 de communiquer avec l'extérieur du serveur SV.

La mémoire non volatile réinscriptible 64 constitue ici un support d'enregistrement conforme à l'invention, lisible par l'unité de traitement 60, et sur lequel est enregistré un programme d'ordinateur PG3 conforme à l'invention, comportant des instructions pour l'exécution d'au moins une partie des étapes d'un procédé de traitement selon l'invention.

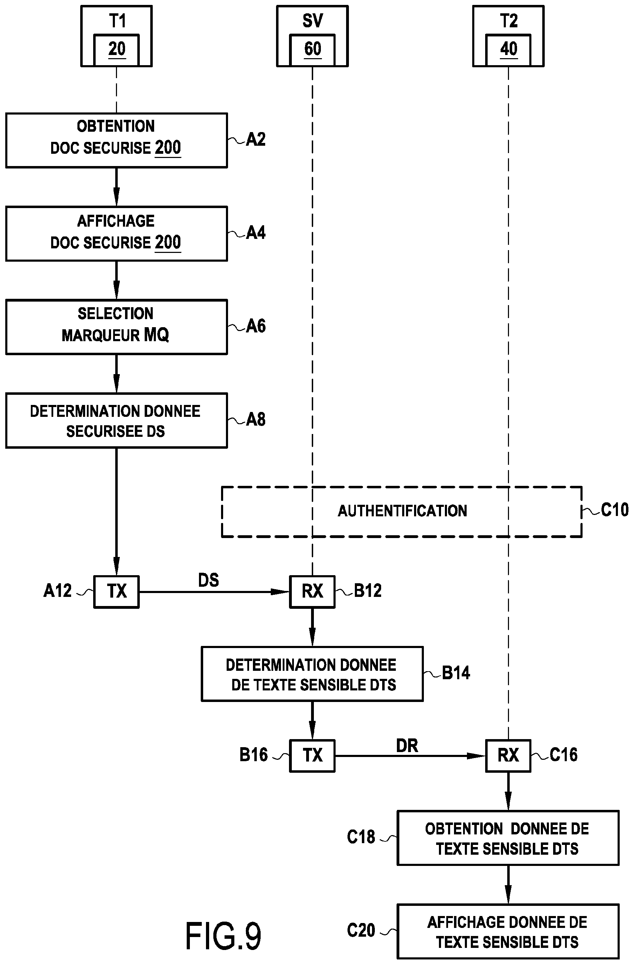

Les principales étapes du procédé de traitement mises en oeuvre par les unités de traitement 20, 40 et 60 sont à présent décrites en référence à la **figure 9** conformément à un premier mode de réalisation de l'invention.

Au cours d'une étape A2, la première unité de traitement 20 (et plus généralement, le terminal T1) obtient le document électronique sécurisé 200 précédemment décrit en référence aux **figures 2 à 4****.** Dans un cas particulier, l'unité de traitement 20 reçoit le document sécurisé 200 depuis l'extérieur du terminal T1. Dans une variante, le document sécurisé 200 est au préalable stocké dans une mémoire du terminal T1. Dans une variante particulière, le document sécurisé 200 a au préalable été créé par l'unité de traitement 20 elle-même de sorte que les unités de traitement 16 et 20 ne forment qu'une seule et même unité de traitement.

L'unité de traitement 20 déclenche (A4) ensuite l'affichage du document sécurisé 200 au moyen de l'écran du terminal T1. Cet affichage peut être déclenché automatiquement ou sur commande de l'utilisateur.

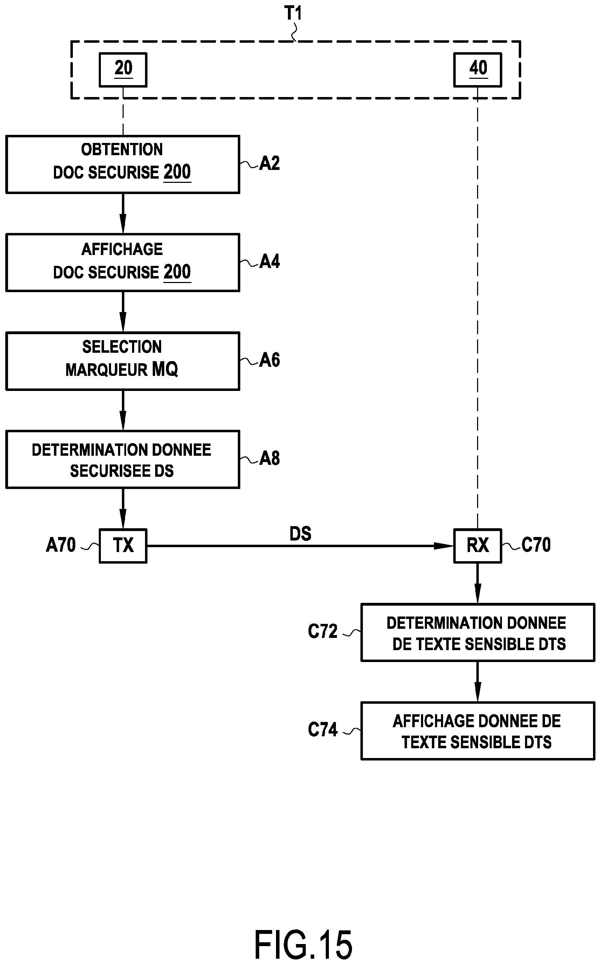

Lorsque l'affichage A4 du document sécurisé 200 est en cours, la première unité de traitement 20 sélectionne (A6), sur commande de l'utilisateur, au moins un marqueur MQ contenu dans le document sécurisé 200 et visualisable lors de l'affichage A4. Dans ce premier exemple, la sélection se fait au moyen de l'interface homme/machine 30, et plus particulièrement au moyen ici d'un pointeur PTR affiché à l'écran (cf. une mise en oeuvre particulière décrite ultérieurement en référence à la **figure 15**).

Comme expliqué par la suite, d'autres manières de sélectionner un marqueur MQ sont envisageables dans le cadre de l'invention.

On considère dans la suite de cet exemple que seul le marqueur MQ1 associé à la donnée de texte sensible 104 a été sélectionné par l'utilisateur à l'étape A6.

A partir du marqueur MQ1 sélectionné, la première unité de traitement 20 détermine (A8) une donnée sécurisée DS associée à partir de laquelle peut être retrouvée la donnée de texte sensible 104. Comme indiqué précédemment, les marqueurs MQ (et notamment MQ1) et la donnée sécurisée DS peuvent se présenter sous différentes formes, la réalisation de l'étape de détermination A8 étant fonction de la forme utilisée pour le marqueur MQ et la donnée sécurisé DS qui lui est associée.

Ainsi, selon une première variante, le marqueur MQ1 est représenté par un objet graphique quelconque tel qu'une simple marque noire (ou un blanc) apparaissant dans le document sécurisée 200, préférentiellement à l'endroit où aurait dû apparaître la donnée de texte sensible DTS correspondante. Le marqueur MQ1 peut comprendre un lien pointant vers la donnée sécurisée DS de sorte que la sélection de MQ1 entraîne la détermination de la donnée sécurisée DS associée.

Alternativement, le marqueur MQ1 peut se présenter sous la forme d'un code ou d'un identifiant. Selon une autre variante, le marqueur MQ1 peut être formé par un code 2D 14C ou équivalent (code barre etc.).

Quel que soit la nature du marqueur MQ1, la sélection de celui-ci permet à la première unité de traitement 20 de déterminer A8 la donnée sécurisée DS associée. L'unité de traitement 20 peut récupérer cette donnée sécurisée directement dans le document sécurisée 200 (si la donnée sécurisée DS est stocké document sécurisé 200 en association avec le marqueur MQ) ou, alternativement, récupérer cette donnée sécurisée DS depuis l'extérieur du document 200. Selon cette dernière variante, l'unité de traitement 20 peut par exemple accéder à une mémoire du terminal T1 pour obtenir la donnée sécurisé DS ou recevoir cette-dernière depuis l'extérieur du terminal T1.

Dans un mode particulier, le document sécurisé 200 comprend une pluralité de marqueurs MQ et la sélection d'un seul de ces marqueurs (tel que MQ1 par exemple) dans le document sécurisé 200 entraîne la sélection automatique de tous les marqueurs MQ compris dans le document sécurisé 200. De cette façon, à l'étape A8, la première unité de traitement 20 détermine la ou des données sécurisées DS associées à tous les marqueurs MQ présents dans le document sécurisé 200. Cette variante permet ultérieurement à l'utilisateur de visualiser, à partir de la sélection d'un seul marqueur MQ, toutes les données de texte sensibles DTS présentes dans le document 100 d'origine, ce qui en facilite l'accès pour l'utilisateur.

Dans un mode de réalisation préféré, la troisième unité de traitement 40 procède (C10) à l'authentification de l'utilisateur ou du terminal T2 auprès du serveur SV. Au cours de cette authentification C10, la troisième unité de traitement 40 envoie au serveur distant SV une donnée d'authentification (et/ou d'identification) DA1 de l'utilisateur ou du terminal T2. Cette donnée d'authentification DA1 est ainsi reçue par la deuxième unité de traitement 60. Cette authentification C10 peut être réalisée à tout moment, par exemple avant l'étape B16 à venir.

Au cours d'une étape A12, la première unité de traitement 20 envoie la donnée sécurisée DS au serveur distant SV. La deuxième unité de traitement 60 obtient (B12) ainsi la donnée sécurisée DS en question.

Dans une variante, la première unité de traitement 20 fournit le marqueur MQ au serveur distant SV et c'est la deuxième unité de traitement 60 qui déterminée la donnée sécurisée DS à partir du marqueur MQ de façon analogue à l'étape A8.

A partir de la donnée sécurisée DS, la deuxième unité de traitement 60 détermine (B14) ensuite la donnée de texte sensible DTS associée (ou éventuellement une donnée intermédiaire DM permettant de retrouver la donnée sensible DTS). Pour ce faire, la deuxième unité de traitement 60 consulte par exemple un fichier accessible par le serveur SV afin de retrouver à partir de la donnée sécurisée DS la donnée de texte sensible DTS correspondante. Cette variante est envisageable par exemple dans le cas où la donnée sécurisée DS est un code ou un identifiant. Le fichier comprend alors au moins le code ou identifiant en association avec la donnée de texte sensible DTS correspondante.

Alternativement, à l'étape B14, la deuxième unité de traitement 60 décrypte la donnée de texte sensible DTS incluse le cas échéant sous forme cryptée dans la donnée sécurisée DS. Si une authentification A10 a été au préalable réalisée entre T2 et SV, la deuxième unité de traitement 60 peut utiliser une clé de décryptage associée au terminal T2 ou à l'utilisateur. La deuxième unité de traitement 60 récupère par exemple cette clé de décryptage à partir de la donnée d'authentification DA1 reçue lors de l'authentification C10.

La deuxième unité de traitement déclenche ensuite l'envoi (B16) via la liaison de communication L2 d'une donnée déterminée DR au deuxième terminal T2, cette donnée DR permettant à la troisième unité de traitement 40 d'obtenir la donnée de texte DT sensible. Cette donnée déterminée DR peut comprendre la donnée de texte sensible DTS elle-même ou, alternativement, la donnée intermédiaire DM permettant d'obtenir la donnée sensible DTS.

La troisième unité de traitement 40 comprise dans le terminal T2 obtient (C18) ainsi la donnée de texte sensible DTS à partir de la donnée déterminée DR. Comme indiqué ci-avant, la donnée déterminée DR peut comprendre la donnée sensible DTS elle-même ou la donnée intermédiaire DM permettant de retrouver la donnée sensible DTS.

La donnée déterminée DR peut être transmise (B16) par la deuxième unité de traitement 60 à la troisième unité de traitement 40 sous forme cryptée au moyen d'une première clé cryptographique CL1. De manière préférée, la deuxième unité de traitement 60 détermine au préalable cette première clé cryptographique CL1 à partir de la donnée d'authentification DA1 reçue le cas échéant depuis le deuxième terminal T2 lors de l'étape d'authentification facultative A10. Toujours dans cette variante, la troisième unité de traitement 40 obtient (C18) la donnée sensible DTS en décryptant la donnée déterminée DR à partir d'une seconde clé cryptographique CL2 concordant avec la première clé cryptographique CL1.

Dans une variante particulière, la donnée intermédiaire DM est un code ou un identifiant utilisé par la troisième unité de traitement 40 pour retrouver la donnée de texte sensible DTS. Pour ce faire, la troisième unité de traitement consulte par exemple un fichier (ou une liste) comprenant un tel code ou identifiant en association avec la donnée de texte sensible DTS correspondante.

Une fois l'étape d'obtention C18 réalisée, la troisième unité de traitement 40 déclenche (C20) l'affichage de la donnée de texte sensible DTS (i.e. 104 dans cet exemple). Cet affichage est par exemple réalisé à l'aide de moyens d'affichage (e.g. un écran) compris dans l'interface homme/machine 50 du deuxième terminal T2. Alternativement, la troisième unité de traitement 40 peut déclencher cet affichage sur un autre terminal de confiance.

L'utilisateur est ainsi en mesure de visualiser de façon sécurisée, au niveau du deuxième terminal T2 (terminal de confiance), la ou les données de texte sensibles DTS correspondant au marqueur MQ précédemment sélectionné au niveau du première terminal T1 (terminal T1 non sécurisé). Les unités de traitement 20 et 40 étant autonomes l'une de l'autre vis-à-vis en particulier de leur système d'exploitation respectif, l'accès de l'utilisateur aux données sensibles DTS au niveau du deuxième terminal T2 ne compromet pas la sécurité de ces données sensibles DTS.

Dans un cas particulier, la troisième unité de traitement 40 est configurée pour :
- obtenir le document électronique sécurisé 200 ;
- incorporer dans ce document sécurisé 200 la ou les données de texte sensibles DTS obtenues à l'étape C18 (les marqueurs MQ sont de préférence remplacés par les données sensibles DTS correspondantes) ; et
- afficher à l'étape C20 le document électronique 200 dans lequel ont été incorporées la ou les données de texte sensibles DTS.

Selon une variante de ce premier mode de réalisation, la deuxième unité de traitement 60 identifie la troisième unité de traitement vers qui envoyer la donnée déterminée DR à l'étape B16 de la façon suivante. La deuxième unité de traitement 60 retrouve dans une mémoire du serveur SV (ou depuis l'extérieur du serveur SV) un identifiant ID3 de la troisième unité de traitement 40 (ou du deuxième terminal T2 dans lequel se trouve la troisième unité de traitement 40) à partir de la donnée d'authentification DA1 reçue à l'étape d'authentification A10. Cet identifiant ID3 peut être un numéro de téléphone ou équivalent (IMSI), une adresse IP ou URL...

Selon une autre variante, la première unité de traitement 20 cherche dans son environnement proche, préférentiellement sur requête de la deuxième unité de traitement 60, la troisième unité de traitement destinée à recevoir la donnée déterminée DR à l'étape C16. Pour ce faire, la première unité de traitement 20 utilise par exemple des moyens de communication sans fil (NFC, WiFi ou bluetoooth etc.) de l'interface de communication 28 pour détecter à proximité la troisième unité de traitement 40 (ou le deuxième terminal T2 dans lequel se trouve la troisième unité de traitement 40). A cet effet, le procédé de traitement de l'invention peut comprendre les étapes suivantes :
- la recherche par la première unité de traitement 20 du deuxième terminal T2 dans un voisinage proche du premier terminal T1 à l'aide des moyens de communication sans fil ;
- la réception par la première unité de traitement 20 d'un identifiant ID3 de la troisième unité de traitement (ou du deuxième terminal T2) lorsque cette dernière se trouve dans le champ de détection des moyens de communication sans fil ; et
- la transmission par la première unité de traitement 20 de l'identifiant ID3 au serveur distant SV,
   dans lequel la deuxième unité de traitement 60 détermine, à partir de l'identifiant ID3, que la donnée DR doit être transmise au deuxième terminal T2 (ou à la troisième unité de traitement 40) à l'étape B16.

Si plusieurs troisièmes unités de traitement potentielles sont détectées à proximité de T1, la sélection est effectuée automatiquement par la première unité de traitement 20 selon des critères prédéfinis ou, alternativement, manuellement par l'utilisateur. Dans une configuration particulière, la première unité de traitement 20 présélectionne la troisième unité de traitement 40 (ou le terminal T2) et l'utilisateur valide ce choix au moyen de l'interface homme/machine 30 (ou éventuellement 50).

Les variantes ci-dessus permettent de s'assurer que la donnée déterminée DR est envoyée vers la troisième unité de traitement appropriée. L'utilisateur peut ainsi visualiser les données de texte sensibles DTS sur le deuxième terminal T2 de son choix. L'utilisateur peut en particulier choisir parmi plusieurs terminaux celui présentant un niveau de confiance suffisant pour réaliser le procédé de traitement du point de vue de la troisième unité de traitement.

A noter que, dans ce document, sauf indications contraires, les éléments communs à deux modes de réalisation distincts portent les mêmes signes de références et présentent des caractéristiques identiques de sorte qu'ils ne sont pas à nouveau décrits par souci de simplicité.

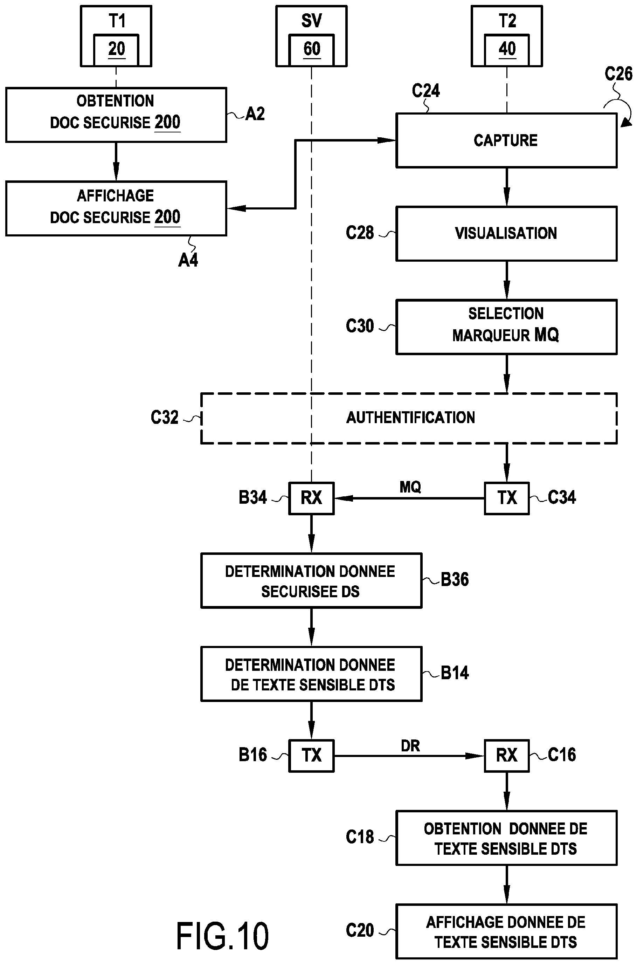

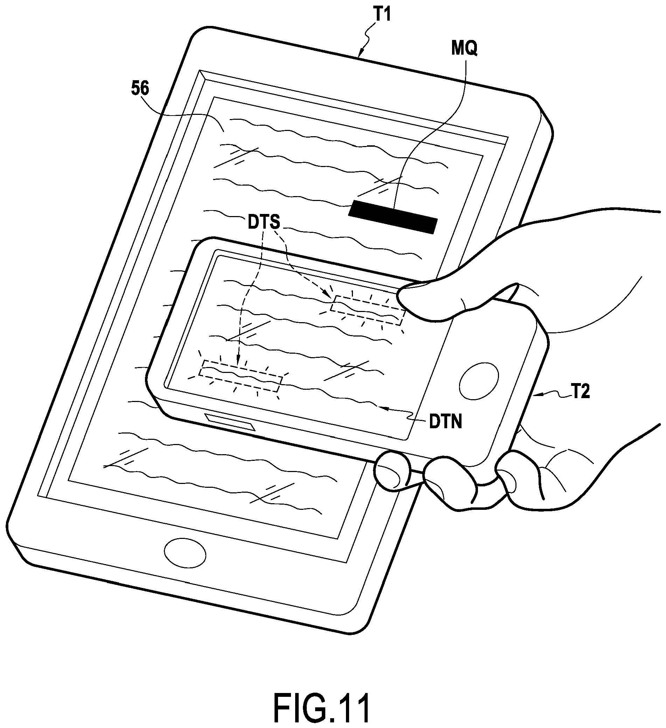

Une variante de réalisation du premier mode de réalisation illustré en **figure 9** est à présent décrite en référence aux **figures 10** **et** **11****.** Cette variante diffère principalement du premier mode ci-dessus en ce que la première unité de traitement 20 utilise les moyens de prise de vue 54 de T2 pour sélectionner un ou plusieurs marqueurs MQ dans le document sécurisé 200.

Plus spécifiquement, la première unité de traitement 20 réalise les étapes A2 et A4 de la même façon qu'expliqué ci-avant en référence à la **figure 9****.** Comme déjà indiqué, les marqueurs MQ1 et MQ2 sont visibles à l'écran lors de l'affichage du document sécurisé 200 sur le premier terminal T1. L'utilisateur constate alors que des données sensibles DTS ont été masquées ou supprimées dans le document sécurisé 200. Dans cette variante, l'utilisateur utilise le dispositif de prise de vue 54 du deuxième terminal T2 pour sélectionner le ou les marqueurs MQ de son choix. Dans cette variante, il est nécessaire que les marqueurs MQ soient lisibles par machine, et plus particulièrement dans cet exemple, interprétables par la troisième unité de traitement 40.

Plus spécifiquement, lors de l'affichage A4 à l'écran 56 du premier terminal T1, l'utilisateur positionne ou oriente le dispositif de prise de vue 54 afin de visualiser à l'écran du deuxième terminal T2 au moins un marqueur MQ visible à l'écran 56 de T1. Dans l'exemple représenté en **figure 11****,** le deuxième terminal T2 est un téléphone mobile et le dispositif de prise de vue 54 comprend une caméra située au dos du téléphone mobile. En passant la caméra du téléphone mobile T2 devant l'écran 56 du premier terminal T1, l'utilisateur s'assure que la caméra capture (C26) une ou plusieurs images représentant le contenu du document sécurisé 200 en cours d'affichage à l'écran 56 de T1. De façon préférentielle, cette capture d'images est réalisée (C26) en continu par le dispositif de prise de vue 54 pendant une durée déterminée non nulle. L'utilisateur visualise ainsi (C28) à l'écran de T2 le ou les marqueurs MQ concernés (ainsi que, dans cet exemple, les éventuelles données de texte normales DTN avoisinantes). La troisième unité de traitement 40 de T2 sélectionne (C30) alors un ou plusieurs marqueurs MQ (MQ1 par exemple), de préférence sur commande de l'utilisateur à l'aide par exemple de l'interface homme/machine 50. Alternativement, la sélection C30 peut être réalisée automatiquement par la troisième unité de traitement 40 de manière systématique ou conformément à des critères prédéfinis.

Dans un cas particulier, la troisième unité de traitement 40 sélectionne C30 en continu chaque marqueur MQ visualisé au moyen du dispositif de prise de vue 54 pendant une durée déterminée non nulle. L'utilisateur commande de préférence le début et la fin de cette période de sélection continue.

De façon facultative, la troisième unité de traitement 40 réalise (C32) une étape d'authentification de l'utilisateur ou du deuxième terminal T2 auprès du serveur SV. Au cours de l'authentification C32, la troisième unité de traitement 40 déclenche par exemple l'envoi vers le serveur SV d'une donnée d'authentification DA2 de l'utilisateur ou du terminal T2.

La troisième unité de traitement 40 déclenche (C34) ensuite l'envoi du marqueur MQ sélectionné vers le serveur SV. La deuxième unité de traitement 60 reçoit (B34) ainsi le marqueur MQ en question. On considère ici le cas où seul un marqueur MQ1 est envoyé au serveur SV à l'étape C34.

A partir du marqueur MQ1 reçu, la deuxième unité de traitement 60 détermine (B36) alors la donnée sécurisée DS de façon analogue à l'étape A8 précédemment décrite. La deuxième unité de traitement 60 détermine (B14) alors, à partir de la donnée sécurisée DS, une donnée de texte sensible DTS, comme déjà expliqué ci-avant en référence à la **figure 9****.** Les étapes B16, C16, C18 et C20 sont ensuite réalisées de la même façon que dans le mode de réalisation de la **figure 9****.**

La variante de la **figure 10** est avantageuse en ce qu'elle permet à l'utilisateur de sélectionner de façon simple et ergonomique un ou plusieurs marqueurs MQ présents dans le document sécurisé 200. L'utilisateur peut par exemple utiliser le terminal T2 à la manière d'une loupe devant l'écran du premier terminal T1 afin de sélectionner les marqueurs MQ de son choix.

De façon préférée, les données sensibles DTS correspondantes sont affichées instantanément à l'écran du deuxième terminal T2 en lieu et place du marqueur MQ sélectionné.

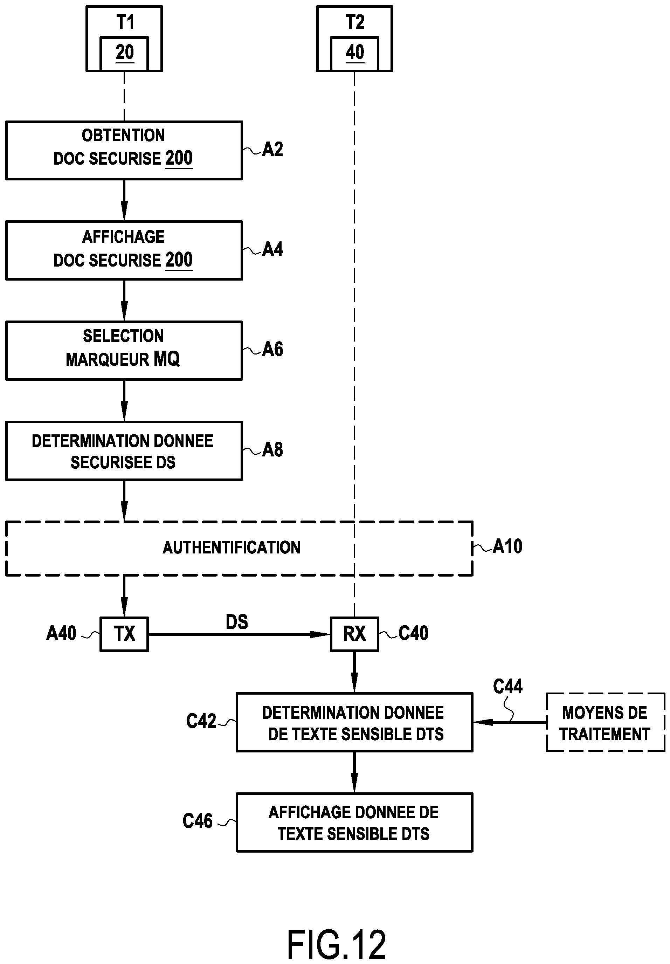

Comme indiqué précédemment, la configuration du système SY de la **figure 5** n'est pas la seule envisageable dans le cadre de l'invention. Un deuxième mode de réalisation de l'invention est à présent décrit en référence à la **figure 12****.**

Conformément à ce deuxième mode de réalisation, les deuxième et troisième unités de traitement 60, 40 envisagées en **figure 5** forment à présent une seule et même unité de traitement 40 située dans le second terminal T2 distant du premier terminal T1. Autrement dit, dans ce deuxième mode de réalisation, le serveur SV n'intervient pas dans la mise en oeuvre de l'invention. Selon ce deuxième mode de réalisation, la première unité de traitement 20 comprise dans T1 et la troisième unité de traitement 40 comprise dans T2 interagissent ensemble pour mettre en oeuvre le procédé de traitement de l'invention.

Plus spécifiquement, la première unité de traitement 20 réalise les étapes A2, A4, A6 et A8 comme déjà expliqué précédemment. De façon facultative, la première unité de traitement réalise (A10) également une étape d'authentification auprès cette fois du terminal T2 de façon analogue à l'étape C10 précédemment décrite.

A l'étape A40, la première unité de traitement 20 déclenche l'envoi de la donnée sécurisée DS au deuxième terminal T2. L'identification du terminal T2 vers qui envoyer la donnée sécurisée DS peut être réalisée à l'aide de moyens de communication sans fil de façon analogue à la variante correspondante décrite ci-dessus en référence au premier mode de réalisation de la **figure 9****.**

Dans un cas particulier, la donnée sécurisée DS est envoyée A40 depuis le premier terminal T1 via la liaison de communication L3 (de préférence courte ou moyenne portée) établie entre les premier et deuxième terminaux T1, T2.

Après réception (C40) de la donnée sécurisée DS, la troisième unité de traitement 40 détermine (C42), à partir de ladite donnée sécurisée DS, la donnée de texte sensible DTS correspondante. Cette détermination peut être réalisée de manière analogue à l'étape B14 accomplie par la deuxième unité de traitement 60 en **figure 9****.**

Dans ce mode de réalisation, la troisième unité de traitement 40 doit donc disposer des moyens de traitement nécessaires pour obtenir la donnée de texte sensible DTS à partir de la donnée sécurisée DS. Ces moyens de traitement peuvent varier selon la nature de la donnée sécurisée DS reçue.

Ces moyens de traitement peuvent comprendre un fichier (ou une table) accessible par la troisième unité de traitement 40, ce fichier comprenant au moins la correspondance entre la donnée sécurisée DS obtenue à l'étape C40 et une donnée de texte sensible DTS (lorsque par exemple la donnée sécurisée DS est un code ou un identifiant permettant d'utiliser un tel fichier).

Ces moyens de traitement peuvent également comprendre des moyens de décryptage lorsque la donnée sécurisée DS comprend la donnée de texte sensible DTS sous forme cryptée. Ces moyens peuvent en particulier comprendre un programme de décryptage ou encore une clé de décryptage.

Lorsque de tels moyens de traitement sont reçus par la troisième unité de traitement 40, cette dernière utilise ces moyens en combinaison à la donnée sécurisée obtenue à l'étape C40 pour déterminer la donnée de texte sensible DTS.

Dans une mise en oeuvre particulière, la troisième unité de traitement 40 reçoit (C44) en moins une partie des moyens de traitement depuis l'extérieur du deuxième terminal T2, en provenance par exemple d'un serveur distant (e.g. le serveur SV).

La troisième unité de traitement 40 déclenche (C46) également l'affichage de la donnée de texte sensible DTS de la même façon qu'à l'étape C20 décrite précédemment en référence à la **figure 9****.**

Ce deuxième mode de réalisation permet ainsi au deuxième terminal T2 d'obtenir la donnée sécurisée DS directement du premier terminal T1 sans avoir à faire intervenir un serveur distant tel que le serveur SV.

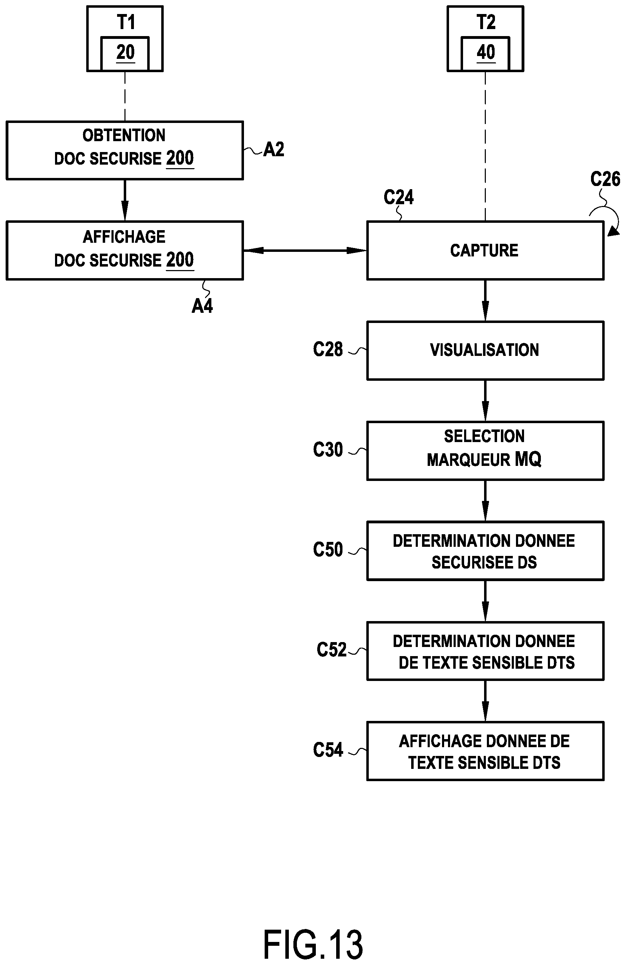

Une variante du deuxième mode de réalisation est à présent décrite en référence à la **figure 13****.** Cette variante fait intervenir le dispositif de prise de vue 54 du terminal T2 de façon analogue à la variante décrite précédemment en référence aux **figures 10** **et** **11****.**

Plus spécifiquement, la première unité de traitement 20 réalise les étapes A2 et A4 comme déjà décrites précédemment. La troisième unité de traitement 40 réalise par ailleurs les étapes C24, C26, C28 et C30 comme décrites précédemment en référence à la **figure 10****.**

La troisième unité de traitement 40 détermine (C50) ensuite, à partir du ou des marqueurs MQ sélectionnés, la donnée sécurisée DS. Cette détermination est par exemple réalisée de manière analogue aux étapes A8 ou B36 précédemment décrites.

A partir de la donnée sécurisée DS, la troisième unité de traitement 40 détermine (C52) la donnée de texte sensible DTS de façon analogue aux étapes C18 ou C42 précédemment décrites.

La troisième unité de traitement 40 déclenche (C54) ensuite l'affichage de la donnée de texte sensible DTS de façon analogue à l'étape C20 ou C46.

Cette variante permet ainsi de sélectionner de façon ergonomique un ou plusieurs marqueurs au moyens du dispositif de prise de vue 54 du deuxième terminal T2 comme illustré par exemple en **figure 11****.**

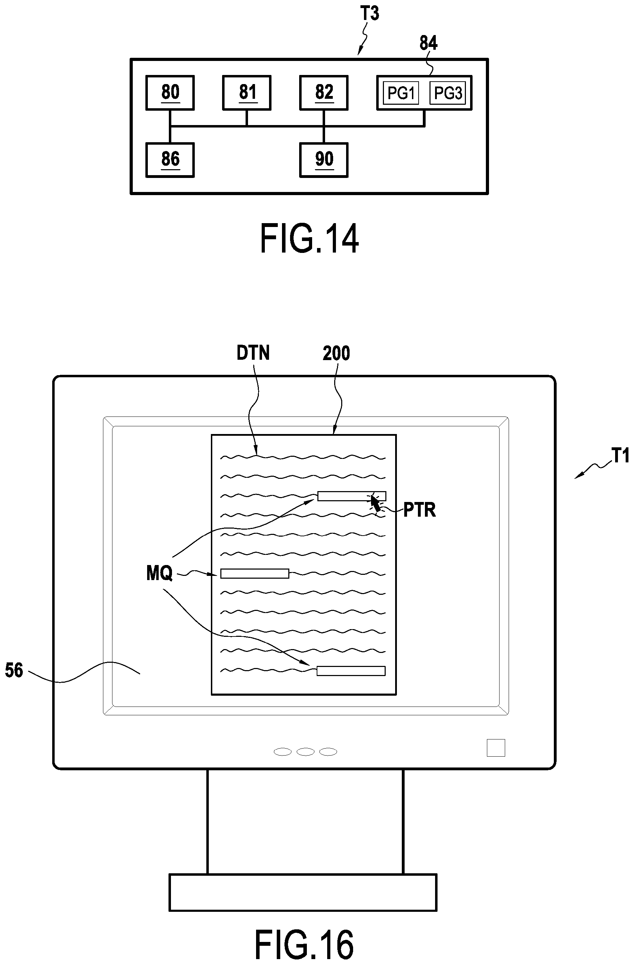

Un troisième mode de réalisation de l'invention est à présent décrit en référence aux **figures 14** **et** **15****.** Ce mode de réalisation diffère du second mode décrit ci-avant en ce que les deux unités de traitement 80 et 81 (dénommées ici respectivement « première » et « deuxième » unité de traitement) qui interagissent ensemble pour accomplir le procédé de l'invention sont situées dans un même terminal, à savoir le terminal T3 dans l'exemple envisagé ci-dessous.

On considère ici l'hypothèse selon laquelle la première unité de traitement 80 présente des risques en termes de sécurité ou du moins n'offre pas un niveau de confiance satisfaisant pour permettre l'accès à des données de texte à caractère sensible. En revanche, on considère ici la deuxième unité de traitement 81 comme étant une unité de traitement de confiance.

De même que pour les modes de réalisation précédents, les unités de traitement 80 et 81 exécutent ici chacune un système d'exploitation autonome l'un de l'autre. Ces deux unités de traitement sont donc distinctes et autonomes l'une de l'autre ce qui permet d'assurer le niveau de sécurité nécessaire lorsque l'utilisateur accède à des données de texte à caractère sensible au moyen de la deuxième unité de traitement 81.

Dans l'exemple représenté en **figue 14,** la structure matérielle du terminal T3 est celle d'un ordinateur ou équivalent et comprend en particulier une première unité de traitement 80 et une deuxième unité de traitement 81, une mémoire morte (de type ROM) 82, une mémoire non volatile réinscriptible 84 (e.g. EEPROM), une mémoire volatile réinscriptible (de type RAM) 86 et une interface homme/machine 30 permettant à un utilisateur d'interagir avec le terminal T3. Cette interface homme/machine 30 comprend notamment des moyens d'affichage tels qu'un écran par exemple.

La mémoire 84 constitue dans cet exemple un support d'enregistrement conforme à l'invention, lisible par les unités de traitement 80 et 81 et sur lequel sont enregistrés des programmes d'ordinateur PG1 et PG3 conformes à l'invention, comportant des instructions pour l'exécution des principales étapes d'un procédé de traitement selon l'invention.

Dans une mise en oeuvre particulière, les deux unités de traitement 80 et 81 sont deux systèmes d'exploitation autonomes l'un de l'autre.

Selon une première variante, ces deux systèmes d'exploitation fonctionnent en parallèle, par exemple grâce à l'utilisation d'un processeur multicoeur, autrement dit un processeur possédant au moins deux coeurs physiques qui travaillent en parallèle.

Alternativement, les deux systèmes d'exploitation fonctionnent en même temps, mais lorsque l'un d'entre eux s'exécute, l'autre est endormi. Dans ce cas, on dit qu'ils ont des exécutions exclusives l'une de l'autre. Dans une mise en oeuvre particulière, un mécanisme de basculement est prévu pour permettre de basculer d'un système d'exploitation vers l'autre en cas d'exécutions exclusives.

Dans cet exemple, le premier système d'exploitation 80 ou « système d'exploitation polyvalent » est conçu pour offrir un grand nombre de fonctionnalités à un utilisateur du terminal T3. La taille mémoire et les performances du premier système d'exploitation sont généralement plus importantes que celle du deuxième système d'exploitation 81. *Android, Windows, BlackBerry OS* ou *Mac OS* (noms commerciaux) sont des exemples de systèmes d'exploitation polyvalents.

Toujours dans cet exemple, le deuxième système d'exploitation 81, parfois dénommé « système d'exploitation de confiance », est protégé contre des attaques logicielles. Seules des applications provenant de fournisseurs accrédités sont installés et exécutées sur ce deuxième système d'exploitation 81. Le deuxième système d'exploitation 81 est en mesure de contrôler de manière sécurisée ses interfaces de programmation (« *Application Programming Interface* » en anglais), de sorte à se protéger contre des attaques logicielles en provenance du premier système d'exploitation 80. Il répond par exemple à la norme « *TEE Protection Profile* » version 1.0 définie par l'organisation *GlobalPlatform,* et dispose ici de moyens de chiffrement de la mémoire qui lui est dédiée.

Chaque système d'exploitation est associé à un environnement d'exécution, qualifié ici de polyvalent dans le cas du système d'exploitation polyvalent et qualifié de confiance dans le cas du système d'exploitation de confiance. Ces deux environnements d'exécution peuvent être hébergés sur un même composant électronique, dénommé « *chipset* » en anglais, et partager des ressources matérielles ou disposer de ressources matérielles dédiées. Le composant électronique intègre par exemple la technologie *TrustZone* développée par ARM, et notamment décrite dans le document « *ARMv7-M Architecture Reference Manual* ». Par ressource, on entend par exemple les mémoires 82, 84 et 86, et l'interface homme/machine 30 mentionnées précédemment, ou encore le processeur ou un bus de données.

Un processeur peut par exemple disposer d'une zone de confiance contrôlée et dédiée au système d'exploitation de confiance, et d'une zone polyvalente dédiée au système d'exploitation polyvalent. Les mémoires volatiles et non-volatiles 82, 84, 86 sont dans cet exemple partagées en lecture/écriture par les deux systèmes d'exploitation 80, 81. Alternativement, chaque système d'exploitation peut avoir des mémoires volatiles et/non volatiles dédiées avec éventuellement des zones de la mémoire non-volatile partagées en lecture/écriture par les deux systèmes d'exploitation. Les deux systèmes d'exploitation peuvent par exemple communiquer via un ou plusieurs registres lu par le système d'exploitation actif.

Dans une mise en oeuvre particulière, la première unité de traitement 80 fonctionne en tant que « rich OS » tandis que la deuxième unité de traitement 81 fonctionne en tant que « TEE OS ». Dans un cas particulier, lorsque l'un des deux systèmes d'exploitation (TEE ou Rich) fonctionne, l'autre est inactif (par exemple mis en veille) de manière à assurer un accès exclusif aux ressources (écran, clavier, mémoire...) du terminal T3. Cette exclusivité pour l'un ou l'autre des deux systèmes d'exploitation garantit un niveau de sécurité optimal lors de la mise en oeuvre de l'invention.

Le terminal T3 peut aussi comprendre un élément sécurisé se présentant par exemple sous la forme d'une carte à microcircuit amovible, ou sous la forme d'un microcircuit embarqué et soudé au circuit imprimé du terminal T3, mais distinct du processeur principal du terminal T3. Un élément sécurisé répond généralement au standard ISO/IEC 7816, au normes *Critères Communs* et/ou à la norme « *GlobalPlatform Card Specification v 2.2.1* ». Il offre une sécurité matérielle et logicielle forte, qui est par exemple définie dans ces mêmes normes. Dans un mode de réalisation particulier, la deuxième unité de traitement 81 est comprise dans un tel élément sécurisé.

Comme indiqué en **figure 15****,** la première unité de traitement 80 réalise les étapes A2, A4, A6 et A8 comme précédemment décrites en référence aux premier et deuxième modes de réalisation.

Une fois la donnée sécurisée DS déterminée (A8), la première unité de traitement 80 envoie (A70) celle-ci à la deuxième unité de traitement 81.

Après réception (C70) de la donnée sécurisée DS, la deuxième unité de traitement 81 détermine (C72), à partir de cette donnée sécurisée DS, la donnée de texte sensible DTS de façon analogue à l'étape C42.

La deuxième unité de traitement 40 déclenche (C74) ensuite l'affichage de la donnée de texte sensible DTS de façon analogue à l'étape C20 (à l'aide par exemple de moyens d'affichage compris dans l'interface homme/machine 90.

La **figure 16** représente un mode de réalisation particulier selon lequel l'utilisateur est apte à sélectionner un ou plusieurs marqueurs MQ présents dans le document sécurisé 200 au moyen d'un pointeur PTR visualisable lors de l'affichage du document 200 (à l'écran du terminal T1 dans cet exemple).

Plus précisément, dans cet exemple, la sélection du marqueur MQ est réalisée au moyen du pointeur PTR qui est visualisable lors de l'affichage au niveau du premier terminal et contrôlable par l'utilisateur au moyen de l'interface homme/machine 30 du premier terminal T1. Le pointeur est configuré pour changer d'aspect visuel lors dudit affichage lorsqu'il entre dans une région du document électronique sécurisé 200 correspondant à l'un desdits marqueurs MQ (par exemple lorsque le pointeur est positionné sur un marqueur MQ).

Il est ainsi plus facile pour l'utilisateur d'identifier les marqueurs MQ dans le document sécurisé, en particulier lorsque ce derniers comporte un grand nombre de données de texte ou quand les marqueurs ne sont pas aisément visualisables par l'utilisateur.

## Revendications

1. Procédé de traitement mis en oeuvre par un système (SY) comprenant une première unité de traitement (20 ; 80) comprise dans un premier terminal (T1), une deuxième unité de traitement (60 ; 40 ; 81) et une troisième unité de traitement (40 ; 81), pour permettre à un utilisateur d'accéder à une donnée de texte sécurisée (DTS) à partir d'un document électronique sécurisé (200), le procédé comprenant :
a) l'obtention par la première unité de traitement (20 ; 80) du document électronique sécurisé (200) ;
b) le déclenchement par la première unité de traitement (20 ; 80) de l'affichage du document électronique sécurisé (200) au niveau du premier terminal (T1) ;
c) la sélection par l'utilisateur d'au moins un marqueur (MQ) contenu dans ledit document sécurisé (200) et visualisable par l'utilisateur lors de l'affichage ;
d) la détermination, à partir dudit marqueur (MQ) sélectionné, d'une donnée sécurisée (DS) à partir de laquelle peut être retrouvée au moins une donnée de texte sensible (DTS) ;
e) l'obtention par la deuxième unité de traitement (60 ; 40 ; 81) de ladite donnée sécurisée (DS) ;
f) la détermination par la deuxième unité de traitement (60 ; 40 ; 81), à partir de ladite donnée sécurisée, de ladite au moins une donnée de texte sensible (DTS) à visualiser ;
g) l'obtention par la troisième unité de traitement (40 ; 81) de ladite au moins une donnée de texte sensible (DTS) ; et
h) le déclenchement par ladite troisième unité de traitement (40 ; 81) de l'affichage de ladite au moins une donnée de texte sensible (DTS),
dans lequel lesdites deuxième et troisième unités de traitement (60 ; 40 ; 81) sont distinctes de ladite première unité de traitement (20 ; 80) et exécutent chacune un système d'exploitation autonome vis-à-vis du système d'exploitation de la première unité de traitement (20 ; 80),
dans lequel les deuxième et troisième unités de traitement (40 ; 60) sont distinctes l'une de l'autre et sont situées hors dudit premier terminal (T1), la troisième unité de traitement (40) étant apte à contrôler un dispositif de prise d'images (54), le marqueur (MQ) étant un code lisible par machine,
dans lequel la sélection du marqueur (MQ) à l'étape c) est réalisée par ladite troisième unité de traitement (40) sur commande de l'utilisateur lorsque le marqueur (MQ) affiché au niveau du premier terminal (T1) est visualisé au moyen dudit dispositif de prise d'images.

2. Procédé selon la revendication 1, dans lequel, lors de l'étape a) d'obtention, la première unité de traitement (20 ; 80) reçoit le document électronique sécurisé (200) depuis l'extérieur dudit premier terminal (T1).

3. Procédé selon la revendication 1 ou 2, ladite donnée sécurisée (DS) étant stockée dans le document sécurisé (200) en association avec ledit marqueur (MQ), la détermination d) comprenant la récupération de ladite donnée sécurisée (DS) dans le document électronique sécurisé (200) à partir dudit marqueur (MQ).

4. Procédé selon la revendication 1 ou 2, dans lequel la donnée sécurisée (DS) est le marqueur (MQ).

5. Procédé selon l'une quelconque des revendications 1 à 4, dans lequel la donnée sécurisée (DS) est un identifiant, ladite donnée de texte (DT) sensible étant déterminée à l'étape f) à partir d'un fichier accessible par ladite deuxième unité de traitement (60 ; 40 ; 81), ledit fichier comprenant au moins ledit identifiant en association avec ladite donnée de texte (DT) sensible.

6. Procédé selon l'une quelconque des revendications 1 à 5, dans lequel la donnée sécurisée (DS) comprend la donnée de texte (DT) sensible sous forme cryptée, ladite détermination à l'étape f) comprenant le décryptage de ladite donnée sécurisée afin d'en déduire ladite donnée de texte (DT) sensible.

7. Procédé selon l'une quelconque des revendications 1 à 6, dans lequel les deuxième et troisième unités de traitement forment une seule et même unité de traitement (81) située dans le premier terminal (T1),
ladite deuxième unité de traitement (81) étant comprise dans le premier terminal (T1), dans lequel la première et la deuxième unité de traitement (80, 81) sont respectivement un premier et un deuxième système d'exploitation qui s'exécutent exclusivement l'un de l'autre, la deuxième unité de traitement répondant à la norme « *TEE Protection Profile version 1.0* » définie par l'organisation *GlobalPlatform.*

8. Procédé selon l'une quelconque des revendications 1 à 7, dans lequel la troisième unité de traitement (40) sélectionne en continu chaque marqueur (MQ) visualisé au moyen dudit dispositif de prise d'images (54) pendant une durée déterminée.

9. Procédé selon l'une quelconque des revendications 1 à 8, dans lequel la deuxième unité de traitement (60) est distincte de ladite troisième unité de traitement (40), ladite troisième unité de traitement (40) étant comprise dans un deuxième terminal (T2) distinct dudit premier terminal (T1) et ladite deuxième unité de traitement (60) étant comprise dans un serveur (SV) distant desdits premier et deuxième terminaux (T1, T2).

10. Procédé selon la revendication 9, dans lequel, lors la sélection c), le dispositif de prise de vue (54) compris dans le deuxième terminal (T2) est positionné ou orienté afin de visualiser sur un écran du deuxième terminal ledit marqueur (MQ) affiché au niveau du premier terminal (T1).

11. Procédé selon la revendication 9, le procédé comprenant la transmission par la deuxième unité de traitement (60) à la troisième unité de traitement (40) d'une donnée déterminée (DR) permettant à la troisième unité de traitement (40) d'obtenir la donnée de texte sensible (DTS) à l'étape g).

12. Procédé selon la revendication 11, dans lequel la donnée déterminée (DR) est transmise par la deuxième unité de traitement (60) à la troisième unité de traitement (40) sous forme cryptée au moyen d'une première clé cryptographique,
la donnée de texte sensible (DTS) étant obtenue par la troisième unité de traitement (40) à l'étape g) en décryptant ladite donnée déterminée (DR) cryptée à partir d'une seconde clé cryptographique concordant avec ladite première clé cryptographique.

13. Procédé selon la revendication 11 ou 12, comprenant :
- la recherche par la première unité de traitement (20) du deuxième terminal (T2) dans un voisinage proche dudit premier terminal (T1) à l'aide de moyens de communication sans fil ;
- la réception par la première unité de traitement (20) d'un identifiant dudit deuxième terminal (T2) lorsque ce dernier est dans le champ de détection des moyens de communication sans fil ; et
- la transmission par la première unité de traitement (20) dudit identifiant au serveur distant (SV),
dans lequel la deuxième unité de traitement (60) identifie, à partir dudit identifiant, le deuxième terminal (T2) vers qui transmettre ladite donnée déterminée.

14. Procédé selon l'une quelconque des revendications 1 à 13, dans lequel la troisième unité de traitement (40 ; 81) est comprise dans un téléphone mobile.

15. Procédé selon l'une quelconque des revendications 1 à 14, dans lequel la sélection c) est réalisée au moyen d'un pointeur (PTR) qui est visualisable lors de l'affichage à l'étape b) au niveau du premier terminal (T1) et contrôlable par l'utilisateur au moyen d'une interface du premier terminal (T1),
ledit pointeur (PTR) étant configuré pour changer d'aspect visuel lors dudit affichage lorsqu'il entre dans une région du document électronique sécurisé correspondant audit marqueur.

16. Procédé selon l'une quelconque des revendications 1 à 15, comprenant, avant l'étape a) d'obtention, les étapes suivantes mise en oeuvre par une quatrième unité de traitement (16) :
i) l'obtention d'un document électronique initial (100) ;
j) la détermination dans ledit document électronique initial (100) de la donnée de texte (DTS) sensible à sécuriser ;
k) la génération de la donnée sécurisée (DS) à partir de ladite donnée de texte sensible (DTS) ; et
l) le traitement dudit document électronique initial (100) afin d'obtenir le document électronique sécurisé (200), comprenant l'inclusion dans le document électronique initial (100) du marqueur (MQ) associé à ladite donnée sécurisée (DS), ainsi que la suppression ou le masquage de la donnée de texte sensible (DTS).

17. Procédé selon la revendication 16, dans lequel ledit traitement l) comprend en outre l'inclusion dans le document électronique initial (100) de ladite donnée sécurisée (DS).

18. Procédé selon la revendication 16 ou 17, dans lequel ladite détermination j) comprend l'affichage dudit document électronique initial (100) et la sélection par la quatrième unité de traitement (16), sur commande d'un utilisateur, de la donnée de texte sensible (DTS) à sécuriser.

19. Procédé selon l'une quelconque des revendications 16 à 18, dans lequel le document électronique initial (100) comprend une chaîne de données de texte successives dans un ordre déterminé, le marqueur (MQ) étant inséré par la quatrième unité de traitement (16) dans le document initial (100) lors dudit traitement l) de sorte que, à l'affichage à l'étape b) du document électronique sécurisé (200), le marqueur (MQ) remplace ladite donnée de texte sensible (DTS) dans ladite chaîne de données de texte.

20. Procédé selon l'une quelconque des revendications 16 à 19, dans lequel, lors du traitement à l'étape l), au moins 70% des données de texte initialement comprises dans le document électronique initial (100) sont supprimés ou masqués dans le document électronique sécurisé (200).

## Patentansprüche

1. Verarbeitungsverfahren, umgesetzt von einem System (SY), umfassend eine erste Verarbeitungseinheit (20; 80), enthalten in einem ersten Endgerät (T1), eine zweite Verarbeitungseinheit (60; 40; 81) und eine dritte Verarbeitungseinheit (40; 81), um einem Benutzer den Zugriff auf eine geschützte Textangabe (DTS) in einem geschützten elektronischen Dokument (200) zu erlauben, wobei das Verfahren umfasst:
a) das Erhalten, durch die erste Verarbeitungseinheit (20; 80), des geschützten elektronischen Dokuments (200),
b) das Auslösen, durch die erste Verarbeitungseinheit (20; 80), der Anzeige des geschützten elektronischen Dokuments (200) auf dem ersten Endgerät (T1),
c) das Auswählen, durch den Benutzer, mindestens eines Markers (MQ), der in dem geschützten Dokument (200) enthalten und von dem Benutzer bei der Anzeige visualisierbar ist,
d) das Bestimmen, anhand des ausgewählten Markers (MQ), einer geschützten Angabe (DS), anhand der mindestens eine sensible Textangabe (DTS) auffindbar ist,
e) das Erhalten, durch die zweite Verarbeitungseinheit (60; 40; 81), der geschützten Angabe (DS),
f) das Bestimmen, durch die zweite Verarbeitungseinheit (60; 40; 81), anhand der geschützten Angabe, der mindestens einen zu visualisierenden sensiblen Textangabe (DTS),
g) das Erhalten, durch die dritte Verarbeitungseinheit (40; 81), der mindestens einen sensiblen Textangabe (DTS), und
h) das Auslösen, durch die dritte Verarbeitungseinheit (40; 81), der Anzeige der mindestens einen sensiblen Textangabe (DTS),
wobei die zweite und die dritte Verarbeitungseinheit (60; 40; 81) von der ersten Verarbeitungseinheit (20; 80) unterschiedlich sind und jeweils ein gegenüber dem Betriebssystem der ersten Verarbeitungseinheit (20; 80) autonomes Betriebssystem ausführen,
wobei die zweite und die dritte Verarbeitungseinheit (40; 60) voneinander unterschiedlich sind und sich außerhalb des ersten Endgeräts (T1) befinden, wobei die dritte Verarbeitungseinheit (40) imstande ist, eine Bildaufnahmevorrichtung (54) zu steuern, wobei der Marker (MQ) ein maschinenlesbarer Code ist,
wobei die Auswahl des Markers (MQ) in Schritt c) durch die dritte Verarbeitungseinheit (40) auf Befehl des Benutzers erfolgt, wenn der auf dem ersten Endgerät (T1) angezeigte Marker (MQ) mittels der Bildaufnahmevorrichtung visualisiert wird.

2. Verfahren nach Anspruch 1, wobei, in Schritt a) des Erhaltens, die erste Verarbeitungseinheit (20; 80) das geschützte elektronische Dokument (200) von außerhalb des ersten Endgeräts (T1) empfängt.

3. Verfahren nach Anspruch 1 oder 2, wobei die geschützte Angabe (DS) in dem geschützten Dokument (200) in Verbindung mit dem Marker (MQ) gespeichert ist, wobei das Bestimmen d) das Rückgewinnen der in dem geschützten elektronischen Dokument (200) geschützten Angabe (DS) anhand des Markers (MQ) umfasst.

4. Verfahren nach Anspruch 1 oder 2, wobei die geschützte Angabe (DS) der Marker (MQ) ist.

5. Verfahren nach einem der Ansprüche 1 bis 4, wobei die geschützte Angabe (DS) ein Kennwort ist, wobei die sensible Textangabe (DT) in Schritt f) anhand einer Datei bestimmt wird, auf die durch die zweite Verarbeitungseinheit (60; 40; 81) zugreifbar ist, wobei die Datei mindestens das Kennwort in Verbindung mit der sensiblen Textangabe (DT) umfasst.

6. Verfahren nach einem der Ansprüche 1 bis 5, wobei die geschützte Angabe (DS) die sensible Textangabe (DT) in verschlüsselter Form umfasst, wobei das Bestimmen in Schritt f) das Entschlüsseln der geschützten Angabe umfasst, um daraus die sensible Textangabe (DT) abzuleiten.

7. Verfahren nach einem der Ansprüche 1 bis 6, wobei die zweite und die dritte Verarbeitungseinheit ein und dieselbe Verarbeitungseinheit (81) bilden, die sich in dem ersten Endgerät (T1) befindet,
wobei die zweite Verarbeitungseinheit (81) im ersten Endgerät (T1) enthalten ist,
wobei die erste und die zweite Verarbeitungseinheit (80, 81) jeweils ein erstes und ein zweites Betriebssystem sind, die voneinander ausschließlich arbeiten, wobei die zweite Verarbeitungseinheit der Norm "*TEE Protection Profile version 1.0*", definiert von der Organisation *GlobalPlatform,* entspricht.

8. Verfahren nach einem der Ansprüche 1 bis 7, wobei die dritte Verarbeitungseinheit (40) kontinuierlich jeden Marker (MQ) auswählt, der während einer bestimmten Dauer mittels der Bildaufnahmevorrichtung (54) visualisiert wird.

9. Verfahren nach einem der Ansprüche 1 bis 8, wobei die zweite Verarbeitungseinheit (60) von der dritten Verarbeitungseinheit (40) unterschiedlich ist, wobei die dritte Verarbeitungseinheit (40) in einem zweiten Endgerät (T2) enthalten ist, das sich von dem ersten Endgerät (T1) unterscheidet, und die zweite Verarbeitungseinheit (60) in einem von dem ersten und dem zweiten Endgerät (T1, T2) entfernten Server (SV) enthalten ist.

10. Verfahren nach Anspruch 9, wobei, beim Auswählen c), die im zweiten Endgerät (T2) enthaltene Bildaufnahmevorrichtung (54) positioniert oder ausgerichtet ist, um auf einem Bildschirm des zweiten Endgeräts den auf dem ersten Endgerät (T1) angezeigten Marker (MQ) zu visualisieren.

11. Verfahren nach Anspruch 9, wobei das Verfahren die Übertragung durch die zweite Verarbeitungseinheit (60) an die dritte Verarbeitungseinheit (40) einer bestimmten Angabe (DR) umfasst, die es der dritten Verarbeitungseinheit (40) erlaubt, die sensible Textangabe (DTS) in Schritt g) zu erhalten.

12. Verfahren nach Anspruch 11, wobei die bestimmte Angabe (DR) durch die zweite Verarbeitungseinheit (60) an die dritte Verarbeitungseinheit (40) mittels eines ersten kryptografischen Schlüssels in verschlüsselter Form übertragen wird,
wobei die sensible Textangabe (DTS) von der dritten Verarbeitungseinheit (40) in Schritt g) durch Entschlüsseln der verschlüsselten bestimmten Angabe (DR) anhand eines zweiten kryptografischen Schlüssels erhalten wird, der auf den ersten kryptografischen Schlüssel abgestimmt ist.

13. Verfahren nach Anspruch 11 oder 12, umfassend:
- das Suchen, durch die erste Verarbeitungseinheit (20), des zweiten Endgeräts (T2) in einer näheren Umgebung des ersten Endgeräts (T1) mit Hilfe von drahtlosen Kommunikationsmitteln,
- das Empfangen, durch die erste Verarbeitungseinheit (20), eines Kennworts des zweiten Endgeräts (T2), wenn sich dieses im Ermittlungsbereich der drahtlosen Kommunikationsmittel befindet, und
- das Übertragen, durch die erste Verarbeitungseinheit (20), des Kennworts an den entfernten Server (SV),
wobei die zweite Verarbeitungseinheit (60) anhand des Kennworts das zweite Endgerät (T2) identifiziert, an welches die bestimmte Angabe zu übertragen ist.

14. Verfahren nach einem der Ansprüche 1 bis 13, wobei die dritte Verarbeitungseinheit (40; 81) in einem Mobiltelefon enthalten ist.

15. Verfahren nach einem der Ansprüche 1 bis 14, wobei die Auswahl c) mittels eines Pointers (PTR) durchgeführt wird, der bei der Anzeige in Schritt b) auf dem ersten Endgerät (T1) visualisierbar und von dem Benutzer mittels einer Schnittstelle des ersten Endgeräts (T1) steuerbar ist,
wobei der Pointer (PTR) konfiguriert ist, um die visuelle Darstellung bei der Anzeige zu ändern, wenn er in eine Region des geschützten elektronischen Dokuments eintritt, die dem Marker entspricht.

16. Verfahren nach einem der Ansprüche 1 bis 15, umfassend, vor dem Schritt a) des Erhaltens, die folgenden Schritte, die durch eine vierte Verarbeitungseinheit (16) umgesetzt werden:
i) das Erhalten eines elektronischen Ausgangsdokuments (100),
j) das Bestimmen, in dem elektronischen Ausgangsdokument (100), der zu schützenden sensiblen Textangabe (DTS),
k) das Erzeugen der geschützten Angabe (DS) anhand der sensiblen Textangabe (DTS), und
l) das Verarbeiten des elektronischen Ausgangsdokuments (100), um das geschützte elektronische Dokument (200) zu erhalten, welches die Integration des mit der geschützten Angabe (DS) verbundenen Markers (MQ) in das elektronische Ausgangsdokument (100) sowie die Unterdrückung oder die Maskierung der sensiblen Textangabe (DTS) umfasst.

17. Verfahren nach Anspruch 16, wobei das Verarbeiten I) ferner den Einschluss der geschützten Angabe (DS) in das elektronische Ausgangsdokument (100) umfasst.

18. Verfahren nach Anspruch 16 oder 17, wobei das Bestimmen j) das Anzeigen des elektronischen Ausgangsdokuments (100) und das Auswählen, durch die vierte Verarbeitungseinheit (16) auf Befehl eines Benutzers, der zu schützenden sensiblen Textangabe (DTS) umfasst.

19. Verfahren nach einem der Ansprüche 16 bis 18, wobei das elektronische Ausgangsdokument (100) eine Verkettung aufeinanderfolgender Textdaten in einer bestimmten Reihenfolge umfasst, wobei der Marker (MQ) durch die vierte Verarbeitungseinheit (16) beim Verarbeiten l) in das Ausgangsdokument (100) integriert wird, so dass beim Anzeigen des geschützten elektronischen Dokuments (200) in Schritt b) der Marker (MQ) die sensible Textangabe (DTS) in der Textdatenverkettung ersetzt.

20. Verfahren nach einem der Ansprüche 16 bis 19, wobei, beim Verarbeiten in Schritt l), mindestens 70 % der ursprünglich in dem elektronischen Ausgangsdokument (100) enthaltenen Textdaten in dem geschützten elektronischen Dokument (200) unterdrückt oder maskiert werden.

## Claims

1. A processing method performed by a system (SY) comprising a first processor unit (20; 80) included in a first terminal (T1), a second processor unit (60; 40; 81), and a third processor unit (40; 81), to enable a user to access an item of secure text data (DTS) from a secure electronic document (200), the method comprising:
a) the first processor unit (20; 80) obtaining the secure electronic document (200);
b) the first processor unit (20; 80) triggering a display of the secure electronic document (200) on the first terminal (T1);
c) the user selecting at least one marker (MQ) contained in said secure document (200) and viewable by the user on the display;
d) on the basis of said selected marker (MQ), determining an item of secure data (DS) from which it is possible to recover at least one item of sensitive text data (DTS);
e) the second processor unit (60; 40; 81) obtaining said item of secure data (DS);
f) the second processor unit (60; 40; 81) determining said at least one item of sensitive text data (DTS) for viewing from said item of secure data;
g) the third processor unit (40; 81) obtaining said at least one item of sensitive text data (DTS); and
h) said third processor unit (40; 81) triggering the display of said at least one item of sensitive text data (DTS);
wherein said second and third processor units (60; 40; 81) are distinct from said first processor unit (20; 80) and each of them executes an operating system that is independent from the operating system of the first processor unit (20; 80),
wherein the second and third processor units (40; 60) are distinct from each other and are situated outside said first terminal (T1), the third processor unit (40) being suitable for controlling a camera device (54), the marker (MQ) being a machine-readable code,
wherein the marker (MQ) is selected in step c) by said third processor unit (40) under user control when the marker (MQ) displayed on the first terminal (T1) is viewed by means of said camera device.

2. The method according to claim 1, wherein, during the obtaining step a), the first processor unit (20; 80) receives the secure electronic document (200) from outside said first terminal (T1).

3. The method according to claim 1 or 2, wherein said item of secure data (DS) is stored in the secure document (200) in association with said marker (MQ), the determination step d) comprising recovering said item of secure data (DS) in the secure electronic document (200) on the basis of said marker (MQ).

4. The method according to claim 1 or 2, wherein the item of secure data (DS) is the marker (MQ).

5. The method according to any one of claims 1 to 4, wherein the item of secure data (DS) is an identifier said item of sensitive text data (DT) being determined in step f) from a file that is accessible to said second processor unit (60; 40; 81), said file comprising at least said identifier in association with said item of sensitive text data (DT).

6. The method according to any one of claims 1 to 5, wherein the item of secure data (DS) comprises the item of sensitive text data (DT) in encrypted form, said determination in step f) comprising decrypting said item of secure data in order to deduce said item of sensitive text data (DT) therefrom.

7. The method according to any one of claims 1 to 6, wherein the second and third processor units form a single processor unit (81) situated in the first terminal (T1),
said second processor unit (81) being contained in the first terminal (T1),
wherein the first and the second processor unit (80, 81) are respectively a first and a second operating system that execute exclusively of each other, the second processor unit satisfying the *"TEE Protection Profile version 1.0"* standard defined by the *GlobalPlatform* Organization.

8. The method according to any one of claims 1 to 7, wherein the third processor unit (40) continuously selects each marker (MQ) viewed by means of said camera device (54) for a determined duration.

9. The method according to any one of claims 1 to 8, wherein the second processor unit (60) is distinct from said third processor unit (40), said third processor unit (40) being contained in a second terminal (T2) distinct from said first terminal (T1) and said second processor unit (60) being contained in a server (SV) remote from said first and second terminals (T1, T2).

10. The method according to claim 9, wherein, during the selection step c), the camera device (54) contained in the second terminal (T2) is positioned or pointed so as to view on a screen of the second terminal said marker (MQ) displayed on the first terminal (T1).

11. The method according to claim 9, wherein the method comprises the second processor unit (60) transmitting a determined item of data (DR) to the third processor unit (40) to enable the third processor unit (40) to obtain the item of sensitive text data (DTS) in step g).

12. The method according to claim 11, wherein the determined item of data (DR) is transmitted by the second processor unit (60) to the third processor unit (40) in encrypted form using a first cryptographic key,
the item of sensitive text data (DTS) being obtained by the third processor unit (40) in step g) by decrypting said determined item of data (DR) that is encrypted from a second cryptographic key matching said first cryptographic key.

13. The method according to claim 11 or 12, comprising:
- the first processor unit (20) of the second terminal (T2) searching in a near vicinity of said first terminal (T1) using wireless communication means;
- the first processor unit (20) receiving an identifier of said second terminal (T2) when it is in the detection field of the wireless communication means; and
- the first processor unit (20) transmitting said identifier to the remote server (SV),
wherein the second processor unit (60) identifies the second terminal (T2) to which said determined item of data is to be transmitted on the basis of said identifier.

14. The method according to any one of claims 1 to 13, wherein the third processor unit (40; 81) is contained in a mobile telephone.

15. The method according to any one of claims 1 to 14, wherein the selection step c) is performed by means of a pointer (PTR) that can be seen in the display of step b) on the first terminal (T1), and that can be controlled by the user by means of an interface of the first terminal (T1),
said pointer (PTR) being configured to change its visual appearance during said display when it enters a region of the secure electronic document that corresponds to said marker.

16. The method according to any one of claims 1 to 15, including, before the obtaining step a), the following steps performed by a fourth processor unit (16):
i) obtaining an initial electronic document (100);
j) determining in said initial electronic document (100) the item of sensitive text data (DTS) that is to be made secure;
k) generating the item of secure data (DS) from said item of sensitive text data (DTS); and
l) processing said initial electronic document (100) in order to obtain the secure electronic document (200) by including in the initial electronic document (100) the marker (MQ) associated with said item of secure data (DS), and by deleting or masking the item of sensitive text data (DTS).

17. The method according to claim 16, wherein said processing step 1) further comprises including said item of secure data (DS) in the initial electronic document (100).

18. The method according to claim 16 or 17, wherein said determination step j) comprises displaying said initial electronic document (100) and the fourth processor unit (16), under the control of a user, selecting the item of sensitive text data (DTS) that is to be made secure.

19. The method according to any one of claims 16 to 18, wherein the initial electronic document (100) comprises a string of successive text data in a determined order, the marker (MQ) being inserted by the fourth processor unit (16) into the initial document (100) during said processing step 1) such that when the secure electronic document (200) is displayed in step b), the marker (MQ) replaces said item of sensitive text data (DTS) in said text data string.

20. The method according to any one of claims 16 to 19, wherein, during the processing of step 1), at least 70% of the text data initially contained in the initial electronic document (100) are deleted or masked in the secure electronic document (200).
